# EUROPEAN PATENT APPLICATION

(11) **EP 2 644 487 A1**
(43) Date of publication of application: **02.10.2013**
(21) Application number: 10859895.4
(22) Date of filing: 22.11.2010
(51) Int. Cl.: B62J 11/00, B62J 9/00

(54) **TWO-WHEELED ELECTRIC VEHICLE**

(71) Applicant: Yamaha Hatsudoki Kabushiki Kaisha, Iwata-shi, Shizuoka 438-8501 (JP)
(72) Inventor: TERADA, Junji, Iwata-shi Shizuoka 438-8501 (JP); SOUMA, Yousuke, Iwata-shi Shizuoka 438-0026 (JP)
(74) Representative: Grünecker, Kinkeldey, Stockmair & Schwanhäusser
(86) International application number: PCT/JP2010/070840
(87) International publication number: WO 2012/070109

(57) **Abstract**

A two-wheeled electric vehicle includes a vehicle body frame. The vehicle body frame includes two frame portions disposed so as to be laterally separated from each other. A battery disposed between the two frame portions supplies electric power to an electric motor that drives a rear wheel. A first bracket and a second bracket are disposed adjacent to the battery. The first bracket includes a seat supporting portion. The second bracket supports the battery from in front of the battery. The brackets are detachably attached to the vehicle body frame.

## Description

### Technical Field

This invention relates to a scooter type two-wheeled electric vehicle.

### Background Art

Recently, a scooter type two-wheeled electric vehicle has been developed. Such a two-wheeled electric vehicle includes a battery, an electric motor to which the electric power of the battery is supplied, and a rear wheel driven by the electric motor (see Patent Literatures 1 and 2, for example). In the two-wheeled electric vehicle, the distance that the vehicle can travel on a single charge is influenced by a battery capacity. The distance that the vehicle can travel on a single charge can be made longer in proportion to an increase in capacity of the battery. It is recommended to make the size of the battery larger in order to increase the battery capacity.

### Citation List

### Patent Literature

PTL 1: Japanese Unexamined Patent Publication No. 6-219359
PTL 2: Japanese Unexamined Patent Publication No. 2004-74911

### Summary of Invention

### Solution to Problem

However, the two-wheeled electric vehicle has great restrictions as to a space in which its components can be disposed, and a battery cannot be needlessly enlarged in size. More specifically, in Patent Literature 1 (PTL 1), the battery is disposed below a foot board on which a driver puts his/her feet. In this arrangement, the position of the foot board is required to be heightened in order to enlarge the arrangement space of the battery. If the position of the foot board is heightened, the position of the seat must also be heightened so as to meet the position of the foot board. If the position of the seat is heightened, the comfort of the two-wheeled electric vehicle will be deteriorated, and, as an example, it will become difficult for a driver to mount or dismount the vehicle because the upper surface (i.e., seating surface) of the seat becomes far from the ground. Therefore, the foot board cannot be heightened, and the battery cannot be enlarged in size.

On the other hand, in Patent Literature 2 (PTL 2), a battery is disposed below a seat. More specifically, Patent Literature 2 discloses an arrangement in which a basal part that supports the seat and that contains the battery is disposed below the seat. The basal part has a left-and-right pair of pipe-shaped basal frames and a basal case disposed between the pair of basal frames.
The basal case is a cylindrical member long in the up-down direction, and has its upper end opened upwardly and its lower end closed. A battery-housing chamber is defined in the basal case. The upper end of the battery-housing chamber is covered with the seat that is pivotable on a hinge. In the battery-housing chamber, the battery is fixed by the basal case. More specifically, guide members that determine the position of the battery are disposed at left and right walls of the basal case, respectively. The battery is disposed between these guide members. A pressure bar spring supported by the lower surface of the seat is provided above the basal case. The battery in the battery housing chamber is placed on a battery supporting tray, and is sandwiched between the left and right guide members, and is fixed by being pressed by the pressure bar spring from above.

As described above, an arrangement in which the battery is fixed by use of the thick-walled basal case supporting the battery requires a large space for fixing the battery. Correspondingly, a space for the battery becomes smaller.
In the arrangement of Citation 2 described above, the battery is required to be lengthened in the up-down direction or in the front-rear direction of the vehicle in order to enlarge the battery disposed below the seat. However, if the battery is lengthened in the up-down direction, the position of the upper surface of the seat must be heightened. If the position of the upper surface of the seat is high, the comfort of the two-wheeled electric vehicle will be deteriorated because it becomes difficult for driver's feet to come into contact with the ground when the vehicle is stopped. Additionally, in the arrangement of Citation 2, the pressure bar spring is disposed below the seat, and therefore the interval between the upper surface of the seat and the upper surface of the battery becomes longer correspondingly to a space in which the pressure bar spring is disposed, and the height of the upper surface of the seat increases.

If the battery is lengthened in the front-rear direction, the battery will be disposed so as to protrude toward the front of the seat. The length in the front-rear direction of the foot board will be shortened because the battery protrudes toward the front of the seat. Therefore, a space necessary to put driver's feet will be reduced, and the comfort of the two-wheeled electric vehicle will be deteriorated.
It is conceivable that the battery is lengthened in the right-left direction. However, the vehicle body frame is disposed adjacent to the left side and the right side of the battery. Therefore, it is difficult to lengthen the battery in the right-left direction.

As described above, in the arrangement of Patent Literature 2, the comfort of the two-wheeled electric vehicle will be deteriorated if the battery is lengthened either in the up-down direction or in the front-rear direction.
Additionally, in Patent Literature 2, if the battery is enlarged in size, workability will be lowered when the battery is attached and detached to and from the basal case. More specifically, in Patent Literature 2, the battery-housing chamber int he basal case is exposed outwardly by upwardly moving the seat around the hinge member. The battery is attached and detached by moving the battery upwardly and downwardly with respect to the battery-housing chamber in a state in which the battery-housing chamber is exposed outwardly.

As described above, when the battery is attached and detached, there is a need to perform the operation of moving the battery upwardly and downwardly at a high position above the seat. Therefore, a rise in weight of the battery resulting from the enlargement of the battery increases a burden imposed on an operator who attaches and detaches the battery. In Citation 2, adequate consideration is not taken for difficulty in attaching and detaching the battery when the battery becomes heavier in proportion to an increase in size of the battery.
One embodiment of the present invention provides a two-wheeled electric vehicle capable of achieving the enlargement of a battery and capable of more easily attaching and detaching the battery without deteriorating the comfort of a driver.

One embodiment of the present invention provides a two-wheeled electric vehicle characterized by including a seat on which a driver sits, a feet-putting portion that is disposed in front of and below the seat and on which feet of the driver are put, a vehicle body frame that has two frame portions both of which are disposed laterally apart from each other and both of which extend upwardly and downwardly below the seat, a vehicle body cover disposed outside the vehicle body frame, a swing unit that has an electric motor to drive a rear wheel and that is swingably connected to the vehicle body frame through a pivot portion, a battery that is disposed between the two frame portions below the seat and that supplies electric power to the electric motor, a first bracket including a seat supporting portion to support the seat from below and a first mounting portion that is disposed between an upper end and a lower end of the battery in a vehicle up-down direction and that is detachably attached to at least either one of the two frame portions, and a second bracket including a battery supporting portion to support the battery from in front of the battery and a secondmounting portion that is detachably attached to the vehicle body frame and being disposed between the upper end and the lower end of the battery in front of the battery.

According to this arrangement, it is possible to synergistically realize improvement in workability when the battery is installed and uninstalled, maintenance of comfort during riding on the two-wheeled electric vehicle, and further improvement in capacity of the battery. According to this arrangement, an operator detaches the first and second brackets when the battery is attached and detached. As a result, the battery never comes into contact with the first and second brackets when the battery is moved to be attached and detached. Therefore, there is no need to reduce the size of the battery in order not to allow the battery to come into contact with the first and second brackets when the battery is moved to be attached and detached, and therefore the battery can be enlarged in size.

Moreover, the battery can be easily attached and detached even if the battery is enlarged in size. More specifically, the first and second brackets are first detached from the frame portion when the battery is attached and detached. As a result, a space below the seat, i.e., a space in which the battery is contained is opened forwardly. Therefore, the battery can be moved in the front-rear direction with respect to the vehicle body frame without being obstructed by the first and second brackets. As a result, the battery can be attached and detached. Therefore, when the battery is attached and detached, there is no need to perform an operation to move the large-sized, heavy battery upwardly and downwardly at a high position near the upper surface of the seat. Therefore, it is possible to improve workability when the battery is attached and detached. Moreover, when the battery is attached and detached, it is possible to use a wide space that is defined in front of the seat and above the feet-putting portion and in which the feet of a driver are put. Therefore, the battery can be more easily attached and detached. As described above, the first and second brackets can be attached and detached to and from the vehicle body frame, and, as a result, it is possible to synergistically and effectively realize enlargement of the battery and improvement in workability during attachment/detachment of the battery.

Additionally, the battery is fixed by the second bracket placed in front of the battery. In other words, this is not an arrangement in which the battery is fixed by a housing cover, unlike the arrangement disclosed by Japanese Unexamined Patent Publication No. 2004-74911 shown as Patent Literature 2. Therefore, an arrangement space for the housing cover becomes unnecessary, and, correspondingly, the capacity of the battery can be made greater in combination with the enlargement of the battery.
As described above, the battery is supported by the second bracket fixed to the vehicle body frame from in front thereof. Therefore, a space between the right and left two frames can be greatly used as a space in which the battery is disposed. Moreover, a member is not indispensable for pressing and holding the battery from the upper side, the left side, and the right side of the battery. Therefore, even if the battery is enlarged in size, the seat can be restrained from being increased in height, and a feet-putting space placed in front of the battery can be restrained from being reduced. As a result, it is possible to synergistically and effectively realize enlargement of the battery and maintenance of comfort of the two-wheeled electric vehicle without being impaired.

As described above, the battery can be disposed below the seat, and the first bracket to support the seat and the second bracket to fix the battery can be attached and detached to and from the frame. As a result, it is possible to synergistically realize improvement in workability when the battery is installed and uninstalled, maintenance of comfort during riding on the two-wheeled electric vehicle, and further improvement in capacity of the battery by being enlarged in size.
In one embodiment of the present invention, the upper end of the battery is disposed above the lower end of the seat and below an upper surface of the seat when viewed laterally.

According to this arrangement, a part of the battery can be disposed in a space defined in the seat. As a result, the overall length of the battery can be made longer, and hence the battery can be enlarged in size without heightening the position of the upper surface of the seat.
In one embodiment of the present invention, the first bracket includes a battery supporting portion that supports the battery from in front of the battery, and, as a result, the first bracket serves also as a second bracket.

According to this arrangement, the bracket supporting the seat can be used also as a battery-supporting bracket.
Preferably, the battery supporting portion includes a central supporting portion that supports a central part of the battery in a vehicle up-down direction.
According to this arrangement, the battery can be supported at a place at which the gravity center and a position in the up-down direction of the battery are close to each other by supporting the central part of the battery in the up-down direction. Therefore, the battery can be supported more stably.

In one embodiment of the present invention, the first bracket includes a battery supporting portion that supports the battery from in front of the battery. The second bracket includes an upper bracket including a battery supporting portion that supports an upper part of the battery from in front of the battery and a second mounting portion detachably attached to the vehicle body frame at a position higher than the first mounting portion. The second bracket additionally includes a lower bracket including a battery supporting portion that supports a lower part of the battery from in front of the battery and a second mounting portion detachably attached to the vehicle body frame at a position lower than the first mounting portion.

According to this arrangement, the upper part, the central part, and the lower part of the battery can be supported by the three brackets, i.e., by the upper bracket, the lower bracket, and the first bracket from in front. Therefore, the battery can be fixed more reliably.
Preferably, the upper bracket includes a pressing portion that presses and holds the battery from above.

According to this arrangement, the battery can be supported by the pressing portion of the upper bracket so as not to vibrate upwardly and downwardly.
In one embodiment of the present invention, preferably, the two-wheeled electric vehicle additionally includes a third bracket that is supported by the vehicle body frame, that is disposed so as to face the battery supporting portion of the upper bracket with the battery between the third bracket and the battery supporting portion of the upper bracket, and that includes a battery supporting portion that supports the battery from behind the battery.

According to this arrangement, the battery can be received by the third bracket from behind. Therefore, the battery can be fixed to the vehicle body frame more firmly so as not to move forwardly and rearwardly.
In one embodiment of the present invention, preferably, the two-wheeled electric vehicle additionally includes a fourth bracket that is supported by the vehicle body frame, that is disposed so as to face the battery supporting portion of the lower bracket with the battery between the fourth bracket and the battery supporting portion of the lower bracket, and that includes a battery supporting portion that supports the battery from behind the battery.

According to this arrangement, the battery is received by the fourth bracket from behind, and, as a result, the battery can be attached to the vehicle body frame more firmly so as not to move forwardly and rearwardly.
In one embodiment of the present invention, the battery supporting portion is made of an elastic member, and elastically presses and holds an outer surface of the battery.
According to this arrangement, the battery is pressed and held by the elastic member, and therefore it is possible to restrain shocks and noises caused by the fact that the battery vibrates with respect to the brackets.

In one embodiment of the present invention, the two-wheeled electric vehicle additionally includes a fifth bracket that is supported by the vehicle body frame and that supports the battery from below the battery.
According to this arrangement, the fifth bracket supports the battery from below, and therefore the battery that is a heavy component can be stably supported. Additionally, the battery can be reliably supported when a vibrating force in the up-down direction, which has high occurrence frequency in the two-wheeled electric vehicle, acts on the battery.

Preferably, the fifth bracket supports the battery in a posture in which the battery is inclined so that the upper end of the battery is positioned more rearwardly than the lower end of the battery.
According to this arrangement, the length in tne height direction of the battery can be increased without heightening the position of the seat. Additionally, the upper end of the battery can be disposed more rearwardly. Therefore, the battery can be disposed so as not to easily touch driver's thighs.

Preferably, the fifth bracket includes a receiving portion that is inclined so as to extend rearwardly and obliquely downwardly and that receives a load of the battery.
According to this arrangement, the battery can be disposed in a naturally inclined direction when the receiving portion is placed on the battery, and therefore the battery is easily positioned when installed. Additionally, the battery is disposed so as to be inclined rearwardly and obliquely upwardly. As a result, the receiving portion can be disposed so as to take the front-rear direction intersecting with the direction of action of vibrations in the up-down direction having high occurrence frequency in the two-wheeled electric vehicle. As a result, a shock from the fifth bracket to the battery that is long in the up-down direction can be reduced, and therefore vibrations of the battery can be reduced.

In one embodiment of the present invention, the frame portion includes a first seat portion. The two-wheeled electric vehicle further includes a first fixing member that detachably fixes the first mounting portion of the first bracket to the first seat portion.
According to this arrangement, the first bracket can be easily attached and detached to and from the vehicle body frame by performing a simple operation to attach and detach the first fixing member.

Preferably, the first seat portion has a first through-hole. Preferably, the first mounting portion has a second through-hole that coaxially faces the first through-hole. Preferably, the first fixing member passes through the first through-hole and the second through-hole.
According to this arrangement, the first bracket can be easily fixed to the vehicle body frame by performing a simple operation to insert the first fixing member into the first and second through-holes.

Preferably, the first through-hole and the second through-hole face each other in a vehicle front-rear direction or in a vehicle right-left direction or in the vehicle up-down direction.
According to this arrangement, the first bracket can be easily fixed to the vehicle body frame by performing a simple operation to insert the first fixing member into the first and second through-holes along the vehicle front-rear direction or the vehicle right-left direction or the vehicle up-down direction.

In one embodiment of the present invention, the frame portion includes a second seat portion. The two-wheeled electric vehicle further includes a second fixing member that detachably fixes the second mounting portion of the second bracket to the second seat portion.
According to this arrangement, the second bracket can be easily attached and detached to and from the vehicle body frame by performing a simple operation to attach and detach the second fixing member.

Preferably, the second seat portion has a third through-hole. Preferably, the second mounting portion has a fourth through-hole that coaxially faces the third through-hole. Preferably, the second fixing member passes through the third through-hole and the fourth through-hole.
According to this arrangement, the second bracket can be easily fixed to the vehicle body frame by performing a simple operation to insert the second fixing member into the third and fourth through-holes.

Preferably, the third through-hole and the fourth through-hole face each other in the vehicle front-rear direction or in the vehicle right-left direction or in the vehicle up-down direction.
According to this arrangement, the second bracket can be easily fixed to the vehicle body frame by performing a simple operation to insert the second fixing member into the third and fourth through-holes along the vehicle front-rear direction or the vehicle right-left direction or the vehicle up-down direction.

The aforementioned or other objects, features, and effects of the present invention will be clarified by the following description of embodiments with reference to the accompanying drawings.

### Brief Description of Drawings

[FIG. 1] FIG. 1 is a left side view of a two-wheeled electric vehicle according to a first embodiment of the present invention.
[FIG. 2] FIG. 2 is a left side view showing a state in which some components, such as a vehicle body cover of the two-wheeled electric vehicle, have been removed.
[FIG. 3] FIG. 3 is a perspective view of a vehicle body frame.
[FIG. 4A] FIG. 4A is an exploded perspective view of a battery and shows a state of the battery viewed from frontally above the battery.
[FIG. 4B] FIG. 4B is a perspective view of the battery viewed from frontally above the battery.
[FIG. 5A] FIG. 5A is an enlarged view showing surroundings of the battery of FIG. 2.
[FIG. 5B] FIG. 5B is a perspective view of a main part around the battery viewed from frontally below.
[FIG. 6A] FIG. 6A is a front view of a first bracket.
[FIG. 6B] FIG. 6B is a left side view of the first bracket.
[FIG. 7] FIG. 7 is a left side view of the main part around the battery of the two-wheeled electric vehicle, for describing a relationship among the battery, a battery supporting device, and the vehicle body frame.
[FIG. 8] FIG. 8 is a sectional view of the main part along line VIII-VIII in FIG. 7, showing a state viewed from above.
[FIG. 9] FIG. 9 is a perspective view showing a connection state between a seat supporting portion and a seat, the seat supporting portion being viewed from left behind.
[FIG. 10A] FIG. 10A is a plan view of an upper second bracket.
[FIG. 10B] FIG. 10B is a front view of the upper second bracket.
[FIG. 10C] FIG. 10C is a left side view of the upper second bracket.
[FIG. 11] FIG. 11 is a perspective view of the main part of the two-wheeled electric vehicle viewed from before.
[FIG. 12A] FIG. 12A is a plan view of a left upper second seat portion.
[FIG. 12B] FIG. 12B is a left side view of the left upper second seat portion.
[FIG. 13A] FIG. 13A is a plan view of a right upper second seat portion.
[FIG. 13B] FIG. 13B is a right side view of the right upper second seat portion.
[FIG. 14] FIG. 14 is an enlarged view of a part of FIG. 11, showing surroundings of the upper part of the battery.
[FIG. 15] FIG. 15 is a sectional view along line XV-XV in FIG. 7, showing a state of the upper second bracket and the upper second seat portion viewed from above.
[FIG. 16A] FIG. 16A is a plan view of a lower second bracket.
[FIG. 16B] FIG. 16B is a front view of the lower second bracket.
[FIG. 17A] FIG. 17A is a plan view of a left supporting unit.
[FIG. 17B] FIG. 17B is a left side view of the left supporting unit.
[FIG. 17C] FIG. 17C is a front view of a right supporting unit.
[FIG. 18A] FIG. 18A is a plan view of the right supporting unit.
[FIG. 18B] FIG. 18B is a left side view of the left supporting unit.
[FIG. 18C] FIG. 18C is a front view of the right supporting unit.
[FIG. 19] FIG. 19 is a sectional view of the main part along line XIX-XIX in FIG. 7, showing a state of the lower second bracket and a lower second seat portion viewed from above.
[FIG. 20] FIG. 20 is a perspective view of a main part around a subframe, showing the subframe viewed from rearwardly obliquely below.
[FIG. 21] FIG. 21 is a perspective view showing a state in which the battery has been detached from the vehicle body frame, viewed from obliquely before.
[FIG. 22A] FIG. 22A is a perspective view of the main part for describing a battery attaching operation and a battery detaching operation.
[FIG. 22B] FIG. 22B is a perspective view of the main part for describing the battery attaching operation and the battery detaching operation.
[FIG. 23] FIG. 23 is a perspective view showing a connecting mechanism and a front end of a swing unit.
[FIG. 24] FIG. 24 is a partially sectional view of the connecting mechanism and the front end of the swing unit, viewed from above.
[FIG. 25] FIG. 25 is a sectional view of a main part of a second embodiment of the present invention viewed from above.
[FIG. 26A] FIG. 26A is a plan view of a main part of a third embodiment of the present invention.
[FIG. 26B] FIG. 26B is a partially-cutaway left side view of the main part of the third embodiment of the present invention.
[FIG. 26C] FIG. 26C is a partially-cut away right side view of the main part of the third embodiment of the present invention.
[FIG. 27] FIG. 27 is a sectional view of a main part of a fourth embodiment of the present invention viewed from above.
[FIG. 28A] FIG. 28A is a partially-cutaway left side view of a main part of a fifth embodiment of the present invention.
[FIG. 28B] FIG. 28B is a partially-cutaway right side view of the main part of the fifth embodiment of the present invention.
[FIG. 29] FIG. 29 is a front view of a main part of a sixth embodiment of the present invention.
[FIG. 30] FIG. 30 is a sectional view of a main part around an intermediate second bracket viewed from above.
[FIG. 31A] FIG. 31A is a pictorial front view showing a modification of a first bracket of the sixth embodiment.
[FIG. 31B] FIG. 31B is a pictorial left side view showing the modification of the first bracket of the sixth embodiment. Description of Embodiments

### <First Embodiment>

A first embodiment of the present invention will be hereinafter described in detail with reference to the drawings.

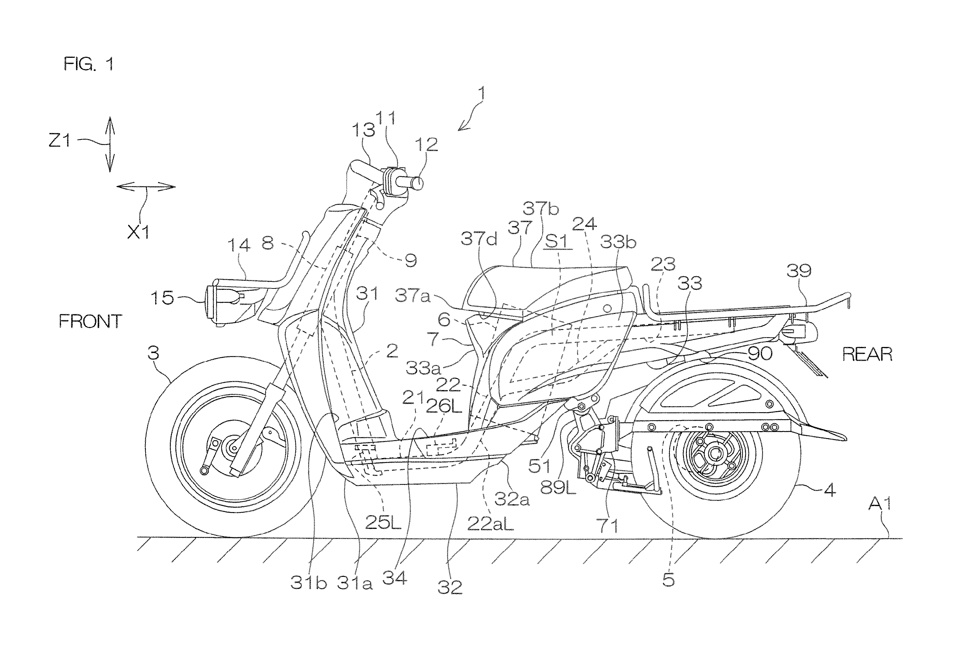

FIG. 1 is a left side view of a two-wheeled electric vehicle 1 according to a first embodiment of the present invention. In this embodiment, the two-wheeled electric vehicle 1 is a scooter. The two-wheeled electric vehicle 1 can travel while placing freight on its front part and on its rear part, and is suitable for use as a freight vehicle.

Each of forward and rearward directions, upward and downward directions, and rightward and leftward directions mentioned in the following description is based on the point of view of a driver (who drives the vehicle) when the two-wheeled electric vehicle 1 is in a basic posture that corresponds to a state of traveling straight on a horizontal plane and when the driver faces forward. A structure of the two-wheeled electric vehicle 1 will be described based on the two-wheeled electric vehicle 1 being in a state in which the vehicle vertically stands up, a state in which a front wheel 3 and a rear wheel 4 are grounded on a road surface A1, and a state in which the driver is not riding thereon.

The two-wheeled electric vehicle 1 is composed of a vehicle body frame 2, the front wheel 3, the rear wheel 4, an electric motor 5, a battery 6, and a vehicle body cover 7. In the two-wheeled electric vehicle 1, the electric motor 5 is driven by electric power supplied from the battery 6 to the electric motor 5, and the rear wheel 4 is driven by an output produced by the electric motor 5. The entire structure of the two-wheeled electric vehicle 1 will be hereinafter described in order from the forward part of a vehicle body.

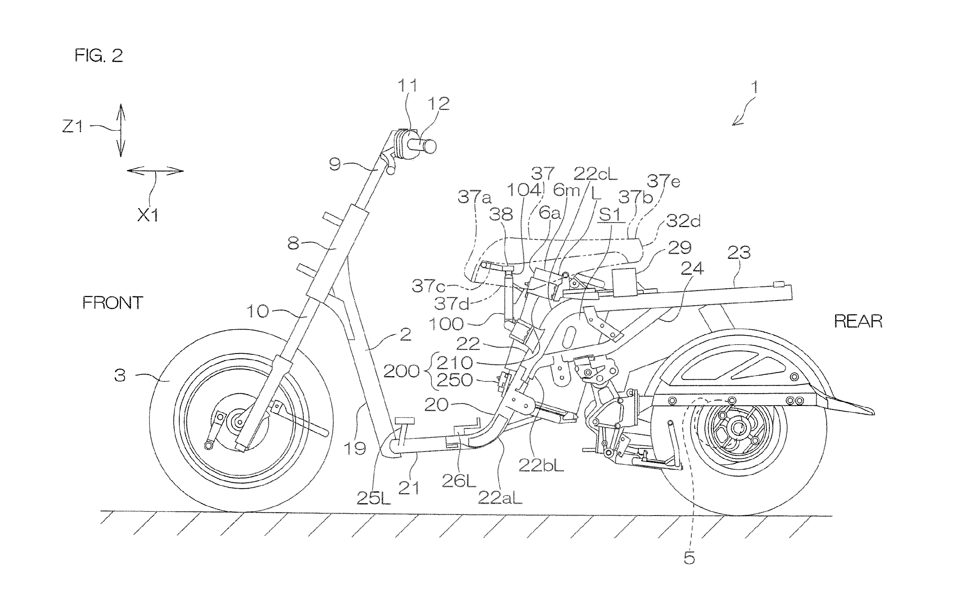

FIG. 2 is a left side view of the two-wheeled electric vehicle 1 from which some components, such as the vehicle body cover 7, have been detached. Hereinafter, parts of the drawings are shown by alternate long and two short dashed lines that is an imaginary line if necessary. The two-wheeled electric vehicle 1 has a head tube 8 disposed at the forward upper part of the two-wheeled electric vehicle 1. A steering shaft 9 is rotatably inserted in the head tube 8. A left-and-right pair of front forks 10 are attached to the lower end of the steering shaft 9. The front wheel 3 is attached to the front forks 10.

A handle 11 is attached to the upper end of the steering shaft 9. A driver can rotate the steering shaft 9, the front forks 10, and the front wheel 3 around the axis line of the steering shaft 9 by operating the handle 11.
Grips 12 are disposed at right and left ends of the handle 11, respectively (only the left grip is shown in the figure). The right grip serves as a throttle grip. The driver can adjust an output produced by the electric motor 5 by rotating the throttle grip.

As shown in FIG. 1, a meter 13 is disposed near the center of the handle 11. A loading platform 14 is disposed below the meter 13. The loading platform 14 is fixed to the head tube 8. The load of pieces of freight piled on the loading platform 14 acts chiefly on the front wheel 3 via the head tube 8, the steering shaft 9, etc. A head lamp 15 is fixed to the lower part of the loading platform 14.

As shown in FIG. 2, the two-wheeled electric vehicle 1 includes the vehicle body frame 2 extending rearwardly from the head tube 8. The vehicle body frame 2 is formed by use of a steel-made pipe member or the like. The vehicle body frame 2 is composed of a front frame 19 and a frame main body 20 disposed behind the front frame 19. The front frame 19 extends from the lower part of the head tube 8 rearwardly obliquely downwardly. The frame main body 20 extends rearwardly from the lower end of the front frame 19 when viewed laterally, and its halfway part in the vehicle front-rear direction X1 has the shape of the letter S.

The frame main body 20 is composed of a first frame portion 21, a second frame portion 22, a third frame portion 23, and a fourth frame portion 24.

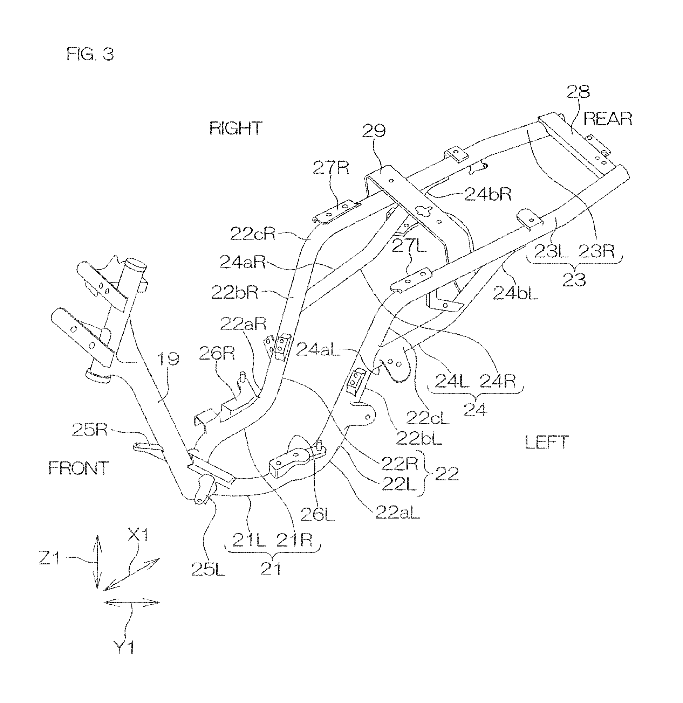

FIG. 3 is a perspective view of the vehicle body frame 2. The first frame portion 21 consists of a left first frame portion 21L and a right first frame portion 21R. In this embodiment, the left first frame portion 21L and the right first frame portion 21R are shaped laterally symmetrically.

The left first frame portion 21L is shaped so as to extend from the lower end of the front frame 19 left-rearwardly and to extend in the front-rear direction X1 from a halfway position. In a side view, the left first frame portion 21L substantially straight extends rearwardly from the lower end of the front frame 19, and is slightly inclined rearwardly obliquely upwardly.
The right first frame portion 21R is shaped so as to extend from the lower end of the front frame 19 right-rearwardly and to extend in the front-rear direction X1 from a halfway position. In a side view, the right first frame portion 21R substantially straight extends rearwardly from the lower end of the front frame 19, and is slightly inclined rearwardly obliquely upwardly.

A stay member 25L is fixed to the front of the left first frame portion 21L. A stay member 26L is fixed to the rear of the left first frame portion 21L. A stay member 25R is fixed to the front of the right first frame portion 21R. A stay member 26R is fixed to the rear of the right first frame portion 21R.
The second frame portion 22 is disposed so as to extend upwardly and downwardly. The second frame portion 22 includes a left second frame portion 22L and a right second frame portion 22R. The left second frame portion 22L and the right second frame portion 22R are one example of "two frame portions" of the present invention. The left second frame portion 22L and the right second frame portion 22R are disposed apart from each other in the right-left direction Y1 of the vehicle. In this embodiment, the left second frame portion 22L and the right second frame portion 22R are shaped laterally symmetrically.

The left second frame portion 22L has the shape of the capital letter S in a side view. The left second frame portion 22L consists of a lower end 22aL, a middle 22bL, and an upper end 22cL. The lower end 22aL has a curved shape, and extends rearwardly from the left first frame portion 21L. The middle 22bL extends straight from the lower end 22aL rearwardly obliquely upwardly. In a side view, the inclination angle of the middle 22bL with respect to the left first frame portion 21L is, for example, about 45 degrees. The upper end 22cL has a curved shape, and extends rearwardly from the middle 22bL. The rear end of the upper end 22cL is directed substantially horizontally.

The right second frame portion 22R has the shape of the capital letter S in a side view. The right second frame portion 22R consists of a lower end 22aR, a middle 22bR, and an upper end 22cR. The lower end 22aR has a curved shape, and extends rearwardly from the right first frame portion 21R. The middle 22bR extends straight from the lower end 22aR rearwardly obliquely upwardly. In a side view, the inclination angle of the middle 22bR with respect to the right first frame portion 21R is, for example, about 45 degrees. The upper end 22cR has a curved shape, and extends from the middle 22bR rearwardly. The rear end of the upper end 22cR is directed substantially horizontally.

A stay member 27L is fixed to the upper end 22cL of the left second frame portion 22L. The stay member 27L is fixed to a substantially-horizontally-directed part of the upper end 22cL. A stay member 27R is fixed to the upper end 22cR of the right second frame portion 22R. The stay member 27R is fixed to a substantially-horizontally-directed part of the upper end 22cR.

The third frame portion 23 consists of a left third frame portion 23L and a right third frame portion 23R. The left third frame portion 23L and the right third frame portion 23R are disposed apart from each other in the right-left direction Y1. In this embodiment, the left third frame portion 23L and the right third frame portion 23R are shaped laterally symmetrically.
The left third frame portion 23L extends from the left second frame portion 22L rearwardly, and is slightly inclined rearwardly obliquely upwardly in a side view.

The right third frame portion 23R extends from the upper end 22cR of the right second frame portion 22R rearwardly, and is slightly inclined rearwardly obliquely upwardly in a side view.
A reinforcement member 28 is disposed between the rear end of the left third frame portion 23L and the rear end of the right third frame portion 23R. The reinforcement member 28 is fixed to the rear end of the left third frame portion 23L and to the rear end of the right third frame portion 23R by, for example, welding.

The left third frame portion 23L and the right third frame portion 23R are connected to a rear seat bracket 29. The rear seat bracket 29 is disposed above the left third frame portion 23L and the right third frame portion 23R.
The fourth frame portion 24 consists of a left fourth frame portion 24L and a right fourth frame portion 24R. The left fourth frame portion 24L and the right fourth frame portion 24R are disposed apart from each other in the right-left direction Y1. In this embodiment, the left fourth frame portion 24L and the right fourth frame portion 24R are shaped laterally symmetrically.

The left fourth frame portion 24L is shaped so as to extend rearwardly obliquely upwardly, be then bent upwardly at a halfway position, and extend rearwardly obliquely upwardly. A front end 24aL of the left fourth frame portion 24L is fixed to the middle 22bL of the left second frame portion 22L by, for example, welding. A rear end 24bL of the left fourth frame portion 24L is fixed to the left third frame portion 23L by, for example, welding.

The right fourth frame portion 24R is shaped so as to extend rearwardly obliquely upwardly, be then bent upwardly at a halfway position, and extend rearwardly obliquely upwardly. A front end 24aR of the right fourth frame portion 24R is fixed to the middle 22bR of the right second frame portion 22R by, for example, welding. A rear end 24bR of the right fourth frame portion 24R is fixed to the right third frame portion 23R by, for example, welding.

As shown in FIG. 1, the vehicle body cover 7 is attached to the vehicle body frame 2. The vehicle body cover 7 consists of a front cover 31 with which the head tube 8 is covered, a lower cover 32 extending from the lower part of the front cover 31 rearwardly, and a rear cover 33 disposed behind the front cover 31.
The front cover 31 surrounds the head tube 8 and a part of the steering shaft 9, and surrounds the front frame 19. The lower cover 32 extends from the lower portion 31a of the front cover 31 rearwardly, and covers the first frame portion 21 and the lower end of the second frame portion 22 from below and from both the right and left sides. A feet-putting portion 34 is disposed at the upper end of the lower cover 32. The feet-putting portion 34 is used for a driver to put his/her feet thereon, and has a substantially flat shape. The feet-putting portion 34 is slightly inclined rearwardly obliquely upwardly in a side view. The feet-putting portion 34 is supported from below by means of the stay members 25L, 26L, 25R, and 26R (note that the stay members 25R and 26R are not shown in FIG. 1) fixed to the first frame portion 21. The feet-putting portion 34 is fixed to these stay members 25L, 26L, 25R, and 26R by use of, for example, screw members.

The rear cover 33 is shaped, as a whole, so as to extend from a rear portion 32a of the lower cover 32 rearwardly obliquely upwardly. The rear cover 33 covers the area of the second frame portion 22 excluding its lower end from the front side and from both the right and left sides. The rear cover 33 covers the third frame portion 23 and the fourth frame portion 24 from the front side and from both the right and left sides.
The rear cover 33 consists of a front portion 33a and a side portion 33b extending from the front portion 33a rearwardly. The front portion 33a of the rear cover 33 is disposed behind the feet-putting portion 34, and extends in the up-down direction Z1 of the vehicle. The front portion 33a covers the middle and the upper end of the second frame portion 22 from the front side.

A seat 37 is disposed above the rear cover 33. A lower end 37d of the seat 37 is disposed adjacent to the rear cover 33. The feet of a driver sitting on the seat 37 are put on the feet-putting portion 34 while the two-wheeled electric vehicle 1 is traveling. The feet-putting portion 34 is disposed between a rear surface 31b of the front cover 31 and the front end 37a of the seat 37 in the front-rear direction X1.
In other words, the feet-putting portion 34 is disposed in front of and below the seat 37. The seat 37 is disposed above the second frame portion 22, is disposed above a part of the third frame portion 23, and is disposed above a part of the fourth frame portion 24. The space surrounded by the seat 37 and the rear cover 33 defines a housing space S1.

With reference to FIG. 2, the seat 37 is shaped so as to extend in the front-rear direction X1, and has an upper surface 37b serving as a seating surface. The seat 37 additionally has a seat concave 37chollowedupwardly frombelow. A buffer member, such as a sponge, is disposed between the upper surface 37b of the seat 37 and the seat concave 37c, so that it becomes possible to lessen a shock that acts on a driver slitting on the seat 37.

The seat 37 is supported by a first bracket 100 and a rear seat bracket 29 that are aligned in the front-rear direction X1. The first bracket 100 is detachably attached to the second frame portion 22. The first bracket 100 extends from the second frame portion 22 upwardly. A hinge portion 38 is provided at the upper end of the first bracket 100. The hinge portion 38 is disposed in the seat concave 37c. The seat 37 is supported by the first bracket 100 through the hinge portion 38. The first bracket 100 supports the seat 37 from below. The seat 37 can be rotated around the hinge portion 38. The housing space S1 can be opened upwardly by rotating the seat 37 around the hinge portion 38. The seat 37 may be fixed directly to the first bracket 100 by removing the hinge portion 38. The rear 37e of the seat 37 is supported by the rear seat bracket 29.

A battery 6 serving as a power source of the electric motor 5 is disposed in the housing space S1 below the seat 37.
As shown in FIG. 1, a loading platform 39 is disposed behind the seat 37. The loading platform 39 is disposed on the third frame portion 23, and is supported by this third frame portion 23. Pieces of freight can be placed on the loading platform 39. The load of the freight placed on the loading platform 39 is received chiefly by the rear wheel 4.

The loading platform 14, the battery 6 that is a heavy component, and the loading platform 39 are aligned in the front-rear direction X1 in this way. Therefore, the balance of the load of the two-wheeled electric vehicle 1 in the front-rear direction X1 can be kept more evenly when pieces of freight are placed on the loading platform 14 and the loading platform 39. Therefore, the high operability of the two-wheeled electric vehicle 1 can be maintained even when pieces of freight are placed on the loading platform 14 and the loading platform 39.

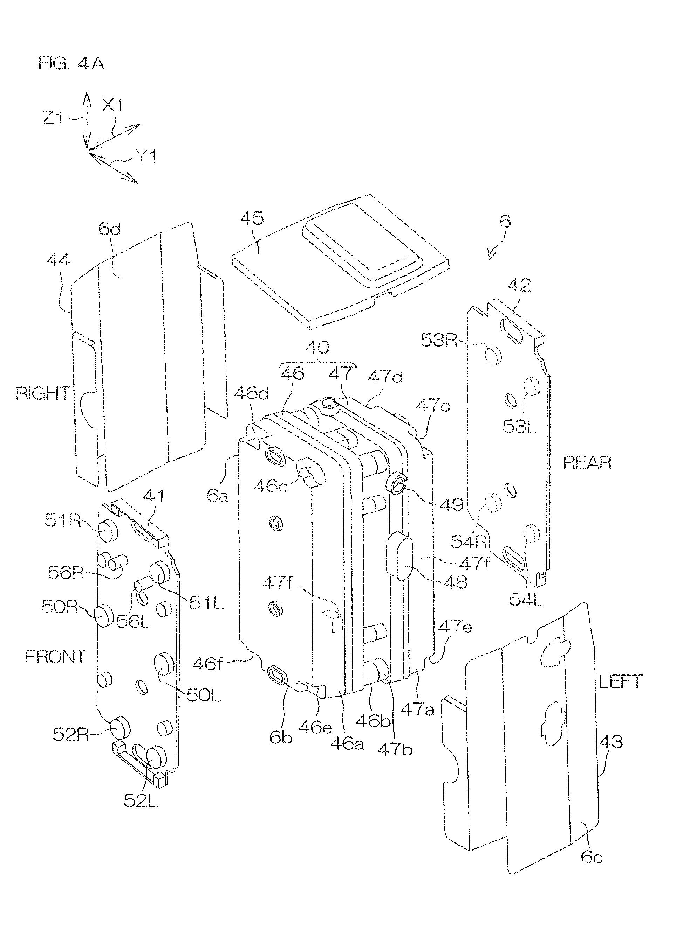

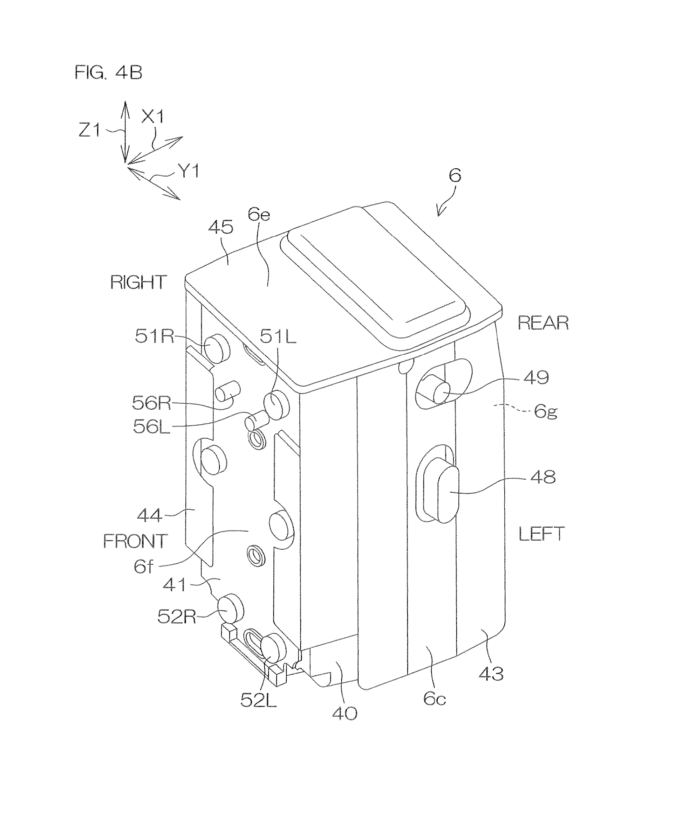

FIG. 4A is an exploded perspective view of the battery 6 viewed from frontally above. FIG. 4B is a perspective view of the battery 6 viewed from frontally above. As shown in FIG. 4A, the battery 6 includes a battery main body 40, a front heat sink 41, a rear heat sink 42, a left cover 43, a right cover 44, and an upper cover 45.
The battery main body 40 consists of a first module 46 and a second module 47. Each of the modules 46 and 47 is structured to contain many chargeable secondary batteries. The first module 46 includes a first case 46a and a plurality of first connection pieces 46b extending from the first case 46a rearwardly. The first case 46a has the shape of a vertically-long rectangular parallelepiped, and contains many chargeable secondary batteries.

A plurality of first to fourth concaves 46c to 46f that are hollow parts are formed in the front part of the first case 46a. The first to fourth concaves 46c to 46f are hollowed rearwardly. The first concave 46c is disposed at the upper-left end of the first case 46a, and is opened leftwardly and upwardly. The second concave 46d is disposed at the upper-right end of the first case 46a, and is opened rightwardly and upwardly. The third concave 46e is disposed at the lower-left end of the first case 46a, and is opened leftwardly and downwardly. The fourth concave 46f is disposed at the lower-right end of the first case 46a, and is opened rightwardly and downwardly.

The second module 47 is disposed behind the first case 46a, and is fixed to the first case 46. The second module 47 is shaped so as to be symmetrical to the first module 46 in the thickness direction of the battery main body 40.
The second module 47 includes a second case 47a and a plurality of second connection pieces 47b extending from the second case 47a forwardly. The second case 47a has the shape of a vertically-long rectangular parallelepiped, and contains many chargeable secondary batteries. Each of the second connection pieces 47b is confronted with a corresponding one of the first connection pieces 46b.

A plurality of fifth to eighth concaves 47c to 47f that are hollow parts are formed in the rear part of the second case 47a. The fifth to eighth concaves 47c to 47f are hollowed forwardly. The fifth concave 47c is disposed at the upper-left end of the second case 47a, and is opened leftwardly and upwardly. The sixth concave 47d is disposed at the upper-right end cf the second case 47a, and is opened rightwardly and upwardly. The seventh concave 47e is disposed at the lower-left end of the second case 47a, and is opened leftwardly and downwardly. The eighth concave 47f is disposed at the lower-right end of the second case 47a, and is opened rightwardly and downwardly. The fifth to eighth concaves 47c to 47f are aligned with the first to fourth concaves 46c to 46f, respectively, in the thickness direction of the battery 6.

A service plug 48 is fixed to the left side surface of the second module 47. The service plug 48 includes a fuse. The supply of an electric current to each secondary battery disposed in the battery main body 40 is cut off by detaching the fuse. This fuse is detached from the battery main body 40, for example, when the battery 6 is attached to or detached from the vehicle body frame 2.
A connection terminal 49 is fixed to the left side surface of the second module 47. The connection terminal 49 is used to electrically connect each secondary battery disposed in the battery main body 40 to external devices outside the battery 6.

The front heat sink 41 is a plate-like member made of a material, such as an aluminum alloy, that has excellent thermal conductivity. The front heat sink 41 is fixed to the front surface of the first case 46a. A plurality of support projections 50L, 50R, 51L, 51R, 52L, and 52R are formed on the front surface of the front heat sink 41. The first support projections 50L and 50R are disposed at the middle part in the up-down direction of the front heat sink 41, and are arranged laterally apart from each other. Upper second support projections 51L and 51R are disposed at the upper part of the front heat sink 41 (i.e., the upper portion 6a of the battery 6), and are arranged laterally apart from each other. Lower second support projections 52L and 52R are disposed at the lower part of the front heat sink 41(i.e., the lower portion 6b of the battery 6), and are arranged laterally apart from each other.

Projecting stoppers 56L and 56R are formed near the upper second support projections 51L and 51R.
The rear heat sink 42 is a plate-like member made of the same material as the front heat sink 41. The rear heat sink 42 is shaped so as to be substantially symmetrical to the front heat sink 41 in the thickness direction of the battery 6. The rear heat sink 42 is fixed to the rear surface of the second case 47a. A plurality of support projections 53L, 53R, 54L, and 54R are formed on the rear surface of the rear heat sink 42. The third support projections 53L and 53R are disposed at the upper part of the rear heat sink 42 (i.e., the upper portion 6a of the battery 6), and are arranged apart from each other in the right-left direction Y1. The fourth support projections 54L and 54R are disposed at the lower part of the rear heat sink 42 (i.e., the lower portion 6b of the battery 6), and are arranged apart from each other in the right-left direction Y1.

The left cover 43, the right cover 44, and the upper cover 45 are made of the same material as the front heat sink 41, and are smaller in thickness than the front heat sink 41.
As shown in FIG. 4A and FIG. 4B, the left cover 43 is fixed to the battery main body 40, and forms a left side surface 6c of the battery 6. The left cover 43 has a through-hole through which the service plug 48 and the connection terminal 49 are inserted. The front end and the rear end of the left cover 43 are bent and brought into contact with the front surface of the front heat sink 41 and the rear surface of the rear heat sink, respectively.

The right cover 44 is fixed to the battery main body 40, and forms a right side surface 6d of the battery 6. The front end and the rear end of the right cover 44 are bent and brought into contact with the front surface of the front heat sink 41 and the rear surface of the rear heat sink 42, respectively. The upper cover 45 is fixed to the battery main body 40, and forms an upper surface 6e of the battery 6. As a result of this structure, the battery 6 has the shape of a rectangular parallelepiped as a whole.

A front surface 6f of the battery 6 is formed by the battery main body 40, the front heat sink 41, the front end of the left cover 43, and the front end of the right cover 44. A rear surface 6g of the battery 6 is formed by the battery main body 40, the rear heat sink 42, the rear end of the left cover 43, and the rear end of the right cover 44.

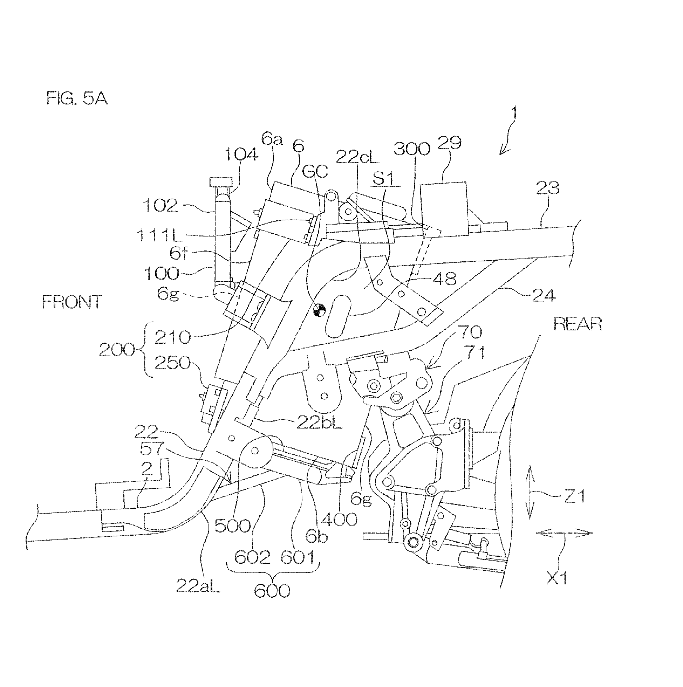

FIG. 5A is an enlarged view showing surroundings of the battery 6 of FIG. 2. The battery 6 is disposed between the second frame portions 22 in the housing space S1 below the seat. The battery 6 is formed in a substantially rectangular shape when viewed laterally, and is longer in length (height) in the vehicle up-down direction Z1 than in length (width) in the front-rear direction X1. The battery 6 is disposed in a posture inclined rearwardly and obliquely upwardly. The upper portion 6a of the battery 6 is disposed between the first bracket 100 and the rear seat bracket 29.

In a side view, the battery 6 is aligned with the second frame portion 22 in the right-left direction Y1. The battery 6 is located between the second frame portions 22L and 22R (note that the second frame portion 22R is not shown in FIG. 5A). Additionally, the battery 6 is aligned with a part of the third frame portion 23 and a part of the fourth frame portion 24 in the right-left direction Y1. In a side view, the service plug 48 of the battery 6 is disposed in a region surrounded by the second frame portion 22, the third frame portion 23, and the fourth frame portion 24. In a side view, the gravity center GC of the battery 6 is located near the service plug 48.

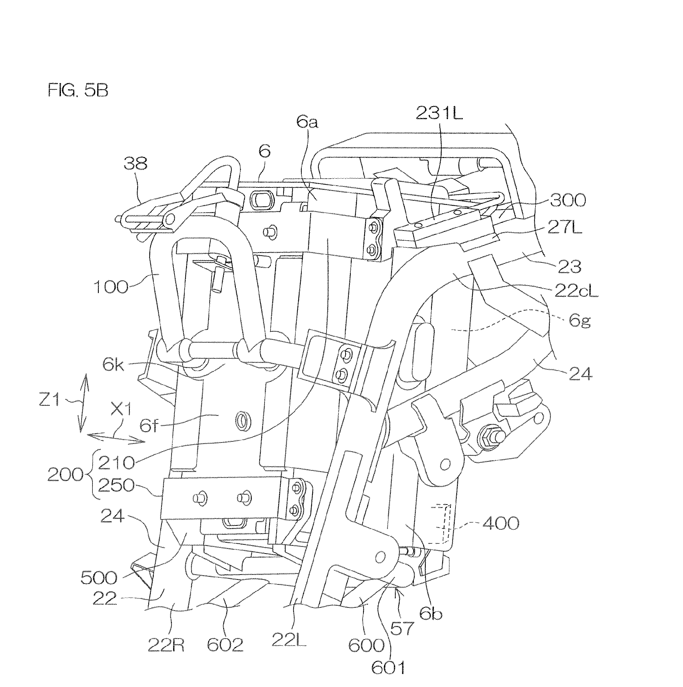

FIG. 5B is a perspective view of a main part around the battery 6 viewed from frontally below. The battery 6 is supported by the vehicle body frame 2 with a battery supporting device 57 therebetween.
The battery supporting device 57 includes a first bracket 100, a second bracket 200, a third bracket 300, a fourth bracket 400, a fifth bracket 500, and a subframe 600. The front surface 6f of the battery 6 is supported by the first bracket 100 and the second bracket 200. The rear surface 6g of the battery 6 is supported by the third bracket 300 and the fourth bracket 400. The lower portion 6b of the battery 6 is supported by the fifth bracket 500.

The first bracket 100 is in contact with a central portion 6k in the up-down direction Z1 of the front surface 6f of the battery 6. The second bracket 200 includes an upper second bracket 210 and a lower second bracket 250. The upper second bracket 210 extends from the upper end of the second frame portion 22 toward the front of the battery 6, and comes into contact with the front surface 6f in the upper portion 6a of the battery 6. The lower second bracket 250 extends from the lower end of the second frame portion 22 toward the front of the battery 6, and comes into contact with the front surface 6f in the lower portion 6b of the battery 6.

The third bracket 300 extends from the third frame portion 23 toward the battery 6, and comes into contact with the rear surface 6g in the upper portion 6a of the battery 6.
The fourth bracket 400 is in contact with the rear surface 6g in the lower portion 6b of the battery 6. The fourth bracket 400 is supported by the subframe 600. The subframe 600 is formed by use of, for example, a metal pipe, and is structured to receive the load of the battery 6. The subframe 600 consists of a subframe main body 601 and an arm portion 602. The subframe main body 601 extends from the second frame portion 22 obliquely rearwardly downwardly. The fourth bracket 400 is fixed to the rear end of the subframe main body 601. The arm portion 602 extends from the subframe main body 601 forwardly obliquely downwardly, and is fixed to the lower end of the second frame portion 22.

The fifth bracket 500 is disposed on the subframe main body 601, and is fixed to the subframe main body 601.
The battery supporting device 57 will be hereinafter described in more detail.

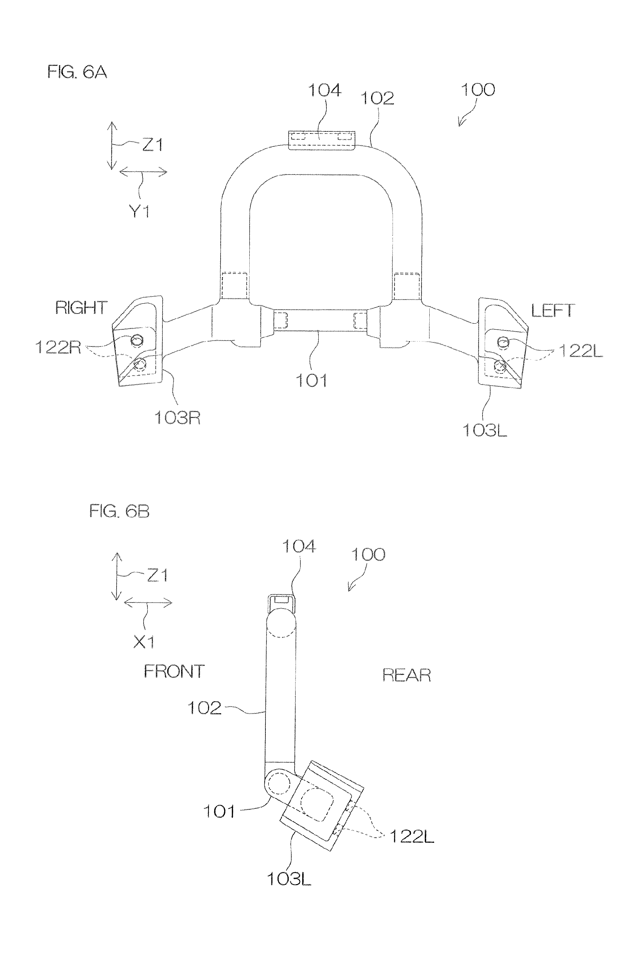

FIG. 6A is a front view of the first bracket 100. FIG. 6B is a left side view of the first bracket 100. As shown in FIG. 6A and FIG. 6B, the first bracket 100 is shaped laterally symmetrically. The first bracket 100 is composed of a first bracket main body 101, a seat supporting portion 102 that extends from the first bracket main body 101 upwardly, and first mounting portions 103L and 103R.

The first bracket main body 101 is shaped like a rod that extends in the right-left direction Y1. The middle part of the first bracket main body 101 extends substantially straight in the right-left direction Y1. Each of the left end part and the right end part of the first bracket main body 101 extends rearwardly obliquely downwardly.
The first mounting portion 103L is fixed to the left end part of the first bracket main body 101, and is disposed on the left side of this left end part. The first mounting portion 103L has left second through-holes 122L. In this embodiment, two left second through-holes 122L are formed apart from each other in the up-down direction Z1.

The first mounting portion 103R is fixed to the right end part of the first bracket main body 101, and is disposed on the right side of this right end part. The first mounting portion 103R has right second through-holes 122R. In this embodiment, two right second through-holes 122R are formed apart from each other in the up-down direction Z1.
The seat supporting portion 102 is fixed to the middle part of the first bracket main body 101. In this embodiment, the seat supporting portion 102 is shaped like the capital letter U directed downwardly, and is fixed to the upper end part of the first bracket main body 101. The seat supporting portion 102 is disposed above each of the first mounting portions 103L and 103R. A seat receiving portion 104 is provided at the upper end of the seat supporting portion 102.

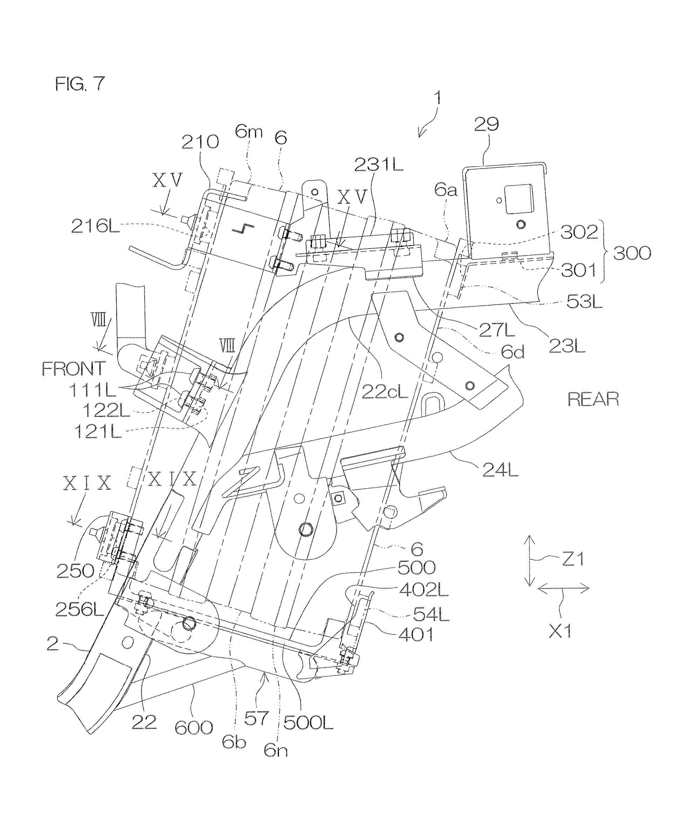

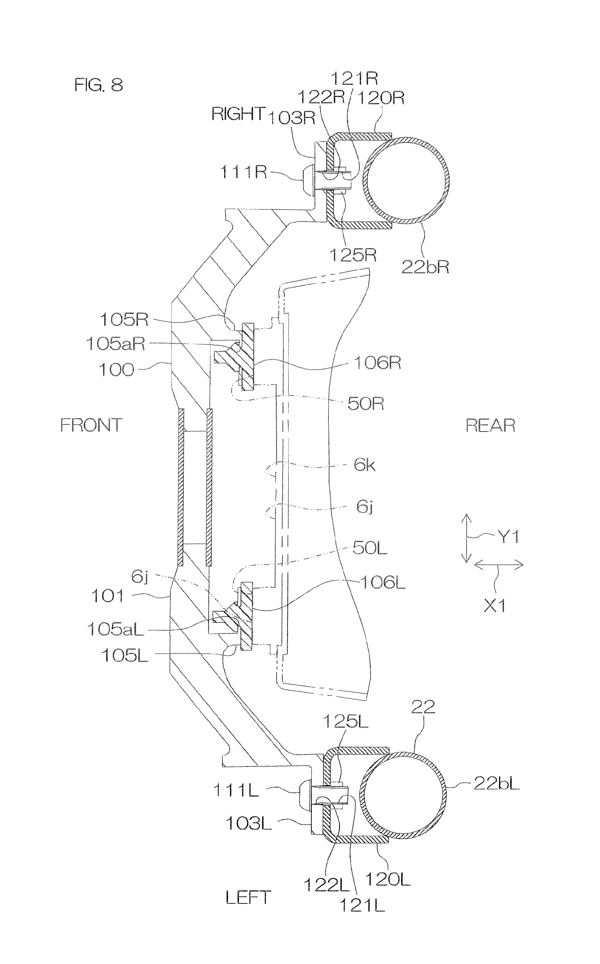

FIG. 7 is a left side view of the main part around the battery 6 of the two-wheeled electric vehicle 1, for describing a relationship among the battery 6, the battery supporting device 57, and the vehicle body frame 2. FIG. 8 is a sectional view of the main part along line VIII-VIII in FIG. 7, showing a state viewed from above.
As shown in FIG. 8, the first bracket 100 includes holding portions 105L and 105R extending from the first bracket main body 101 rearwardly and first battery supporting portions 106L and 106R held by the holding portions 105L and 105R, respectively. Each of the holding portions 105L and 105R has the shape of the capital letter L in a plan view. The holding portions 105L and 105R and the first bracket main body 101 are made of a metallic material.

The first battery supporting portions 106L and 106R are integrally-molded pieces made of an elastic member such as rubber. The first battery supporting portions 106L and 106R are one example of a "central supporting portion" of the present invention.
The first battery supporting portion 106L passes through a through-hole 105aL formed in the holding portion 105L. The first battery supporting portion 106L is shaped like a disk behind the through-hole 105aL, and is brought into elastic contact with the support projection 50L of the battery 6 from before, so that an outer surface 6j of the battery 6 is elastically pressed.

The first battery supporting portion 106R passes through a through-hole 105aR formed in the holding portion 105R. The first battery supporting portion 106R is shaped like a disk behind the through-hole 105aR, and is brought into elastic contact with the support projection 50R of the battery 6 from before, so that the outer surface 6j of the battery 6 is elastically pressed.
As a result, the first battery supporting portions 106L and 106R of the first bracket 100 support the central portion 6k in the up-down direction Z1 of the battery 6 from before. As described above, the first bracket 100 includes the first battery supporting portions 106L and 106R, and hence serves also as the "second bracket" of the present invention.

The first bracket 100 is supported by the second frame portion 22. The second frame portion 22 includes first seat portions 120L and 120R used to fix the first mounting portions 103L and 103R of the first bracket 100.
The first seat portion 120L is fixed to the middle 22bL of the left second frame portion 22L, and protrudes from the middle 22bL forwardly. The first seat portion 120L has the shape of the capital letter U in a plan view, and additionally has a first nut 125L on the back side of its forward end.

The first through-hole 121L used as a screw hole of the first nut 125L faces the second through-hole 122L of the first mounting portion 103L in the front-rear direction X1. In this embodiment, the expression "facing in the front-rear direction X1" denotes "facing in the front-rear direction X1 in a plan view, "and is not limited to "being parallel to the front-rear direction X1."
The first seat portion 120L receives the first mounting portion 103L. The first mounting portion 103L is detachably attached to the first seat portion 120L by use of a first fixing member 111L. In this embodiment, the first fixing member 111L is a screw member.

The first fixing member 111L passes through the second through-hole 122L and the first through-hole 121L that are aligned in the front-rear direction X1, and is screwed to the first nut 125L.
The first seat portion 120R is fixed to the middle 22bR of the right second frame portion 22R, and protrudes from the middle 22bR forwardly. The first seat portion 120R has the shape of the capital letter U in a plan view, and additionally has a first nut 125R on the back side of its forward end.

The first through-hole 121R used as a screw hole of the first nut 125R faces the second through-hole 122R of the first mounting portion 103R in the front-rear direction X1.
The forward end of the first seat portion 120R receives the first mounting portion 103R. The first mounting portion 103R is detachably attached to the first seat portion 120R by use of first fixing members 111R. In this embodiment, the first fixing member 111R is a screw member.

The first fixing member 111R passes through the second through-hole 122R and the first through-hole 121R that are aligned in the front-rear direction X1, and is screwed to the first nut 125R.
In this embodiment, a plurality of first fixing members 111L and 111R (for example, two, respectively) are disposed apart from each other in the up-down direction Z1.

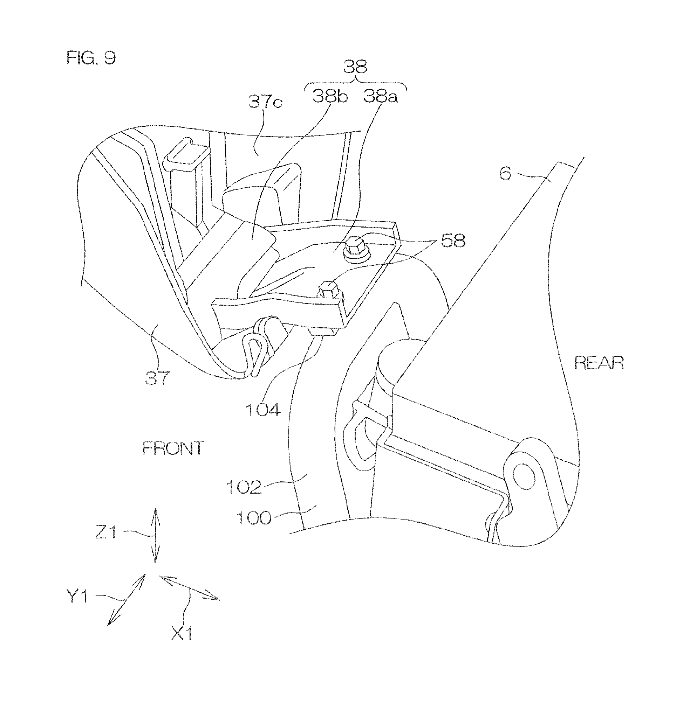

FIG. 9 is a perspective view showing a connection state between the seat supporting portion 102 and the seat 37, and the seat supporting portion 102 is viewed from left behind.

The seat receiving portion 104 at the upper end of the seat supporting portion 102 receives the hinge portion 38. The hinge portion 38 consists of a first portion 38a fixed to the seat receiving portion 104 of the seat supporting portion 102 and a second portion 38b fixed to the seat 37 in the seat concave 37c. The rear end of the first portion 38a is fixed to the seat receiving portion 104 by use of screw members 58 and 58. The seat 37 is received from below by the seat receiving portion 104 through the hinge portion 38. The weight of a driver sitting on the seat 37 is received by the seat receiving portion 104 through the hinge portion 38.

As shown in FIG. 2, the front part of an upper end 6m of the battery 6 is disposed at the seat concave 37c. In other words, the upper end 6m of the battery 6 is disposed above the lower end 37d of the seat 37 and below the upper surface 37b of the seat 37.
In a side view, the seat receiving portion 104 is disposed in front of the upper end 6m of the battery 6. The seat receiving portion 104 is aligned with the rear seat bracket 29 in the front-rear direction X1.

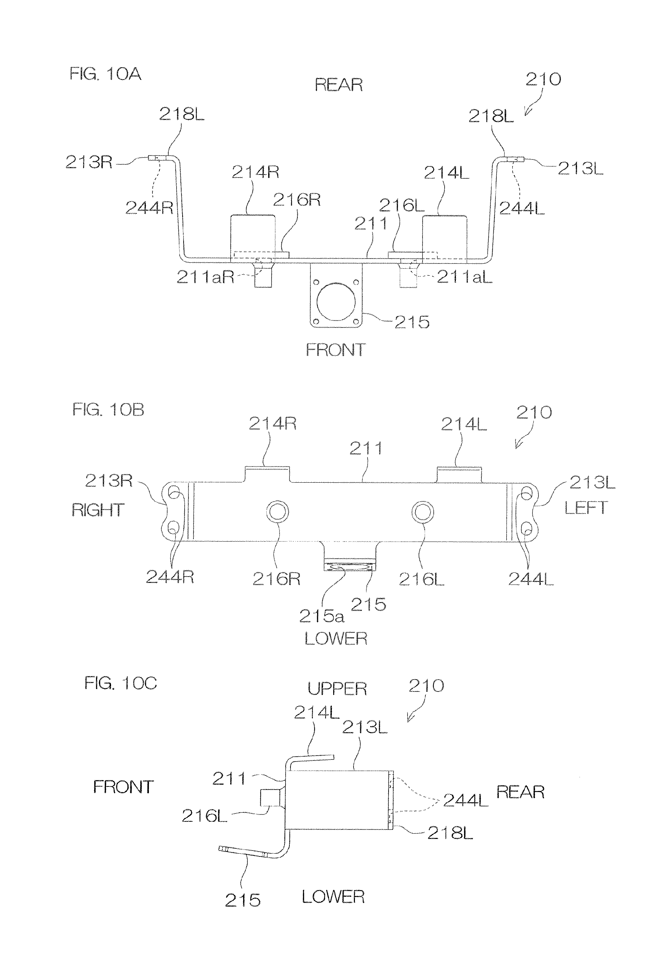

FIG. 10A is a plan view of the upper second bracket 210, FIG. 10B is a front view of the upper second bracket 210, and FIG. 10C is a left side view of the upper second bracket 210.
The upper second bracket 210 includes a plate-like upper second bracket main body 211 extending in the right-left direction Y1, upper second mounting portions 213L and 213R, upper pressing portions 214L and 214R, a holder 215, and upper second battery supporting portions 216L and 216R. The upper second bracket main body 211, the upper second mounting portions 213L and 213R, the upper pressing portions 214L and 214R, and the holder 215 are integrally molded by use of a metallic plate.

The upper second mounting portion 213L extends from the left end of the upper second bracket main body 211 rearwardly. A halfway part of the upper second mounting portion 213L is bent, and a rear end 218L of the upper second mounting portion 213L extends in parallel with the upper second bracket main body 211. Upper fourth through-holes 244L are formed in the rear end 218L of the upper second mounting portion 213L. In this embodiment, a plurality of upper fourth through-holes 244L (for example, two) are formed apart from each other in the up-down direction Z1.

The upper second mounting portion 213R extends from the right end of the upper second bracket main body 211 rearwardly. A halfway part of the upper second mounting portion 213R is bent, and the rear end 218R of the upper second mounting portion 213R extends in parallel with the upper second bracket main body 211. Upper fourth through-holes 244R are formed in the rear end 218R of the upper second mounting portion 213R. In this embodiment, a plurality of upper fourth through-holes 244R (for example, two) are formed apart fromeach other in the up-down direction Z1.

Each of the upper pressing portions 214L and 214R has the shape of the capital letter L, and extends from the upper end of the upper second bracket main body 211 rearwardly.
The holder 215 has the shape of the capital letter L, and extends from the lower end of the upper second bracket main body 211 forwardly. The holder 215 is an annular plate. A holding hole 215a is formed in the holder 215.

The upper second battery supporting portions 216L and 216R are integrally-molded pieces made of an elastic member such as rubber. The upper second battery supporting portion 216L passes through a through-hole 211aL formed in the upper second bracket main body 211. The upper second battery supporting portion 216L is shaped like a disk behind the through-hole 211aL. The upper second battery supporting portion 216R passes through a through-hole 211aR formed in the upper second bracket main body 211. The upper second battery supporting portion 216R is shaped like a disk behind the through-hole 211aR. The upper second battery supporting portions 216L and 216R are disposed apart from each other in the right-left direction Y1.

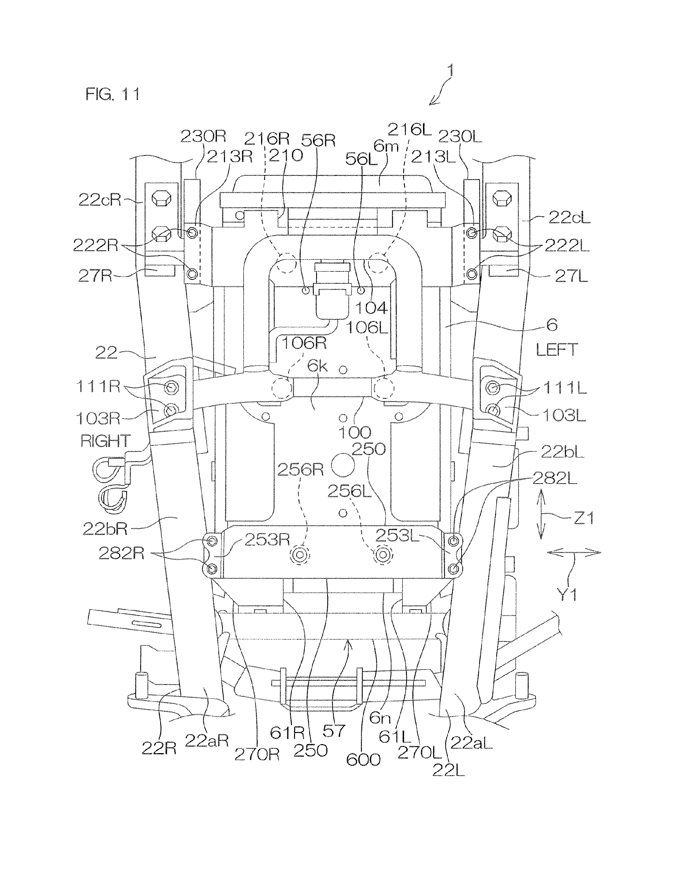

FIG. 11 is a perspective view of the main part of the two-wheeled electric vehicle 1 viewed from before. The upper second bracket 210 is disposed above the first mounting portions 103L and 103R. The upper second bracket 210 is detachably supported by the second frame portion 22 through upper second seat portions 230L and 230R.
The upper second seat portion 230L is fixed to the upper surface of the upper end 22cL of the left second frame portion 22L.

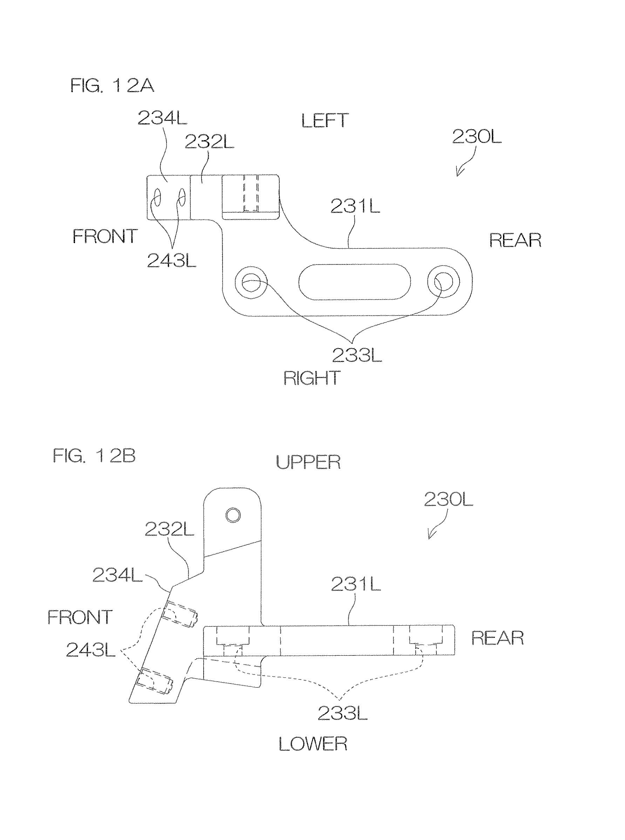

FIG. 12A is a plan view of the upper second seat portion 230L, and FIG. 12B is a left side view of the upper second seat portion 230L. The upper second seat portion 230L includes an upper second seat portion main body 231L and a projection 232L protruding from the upper second seat portion 230L right forwardly. The upper second seat portion main body 231L is shaped like a plate slender in the front-rear direction X1. Through-holes 233L extending in the up-down direction Z1 are formed in the upper second seat portion main body 231L. In this embodiment, a plurality of through-holes 233L (for example, two) are formed apart from each other in the front-rear direction X1.

A forward end surface 234L of the projection 232L is formed in a plane that extends rearwardly obliquely upwardly. Upper third through-holes 243L are formed in the forward end surface 234L of the projection 232L. The upper third through-hole 243L is a screw hole. In this embodiment, a plurality of upper third through-holes 243L (for example, two) are formed apart from each other in the up-down direction Z1.

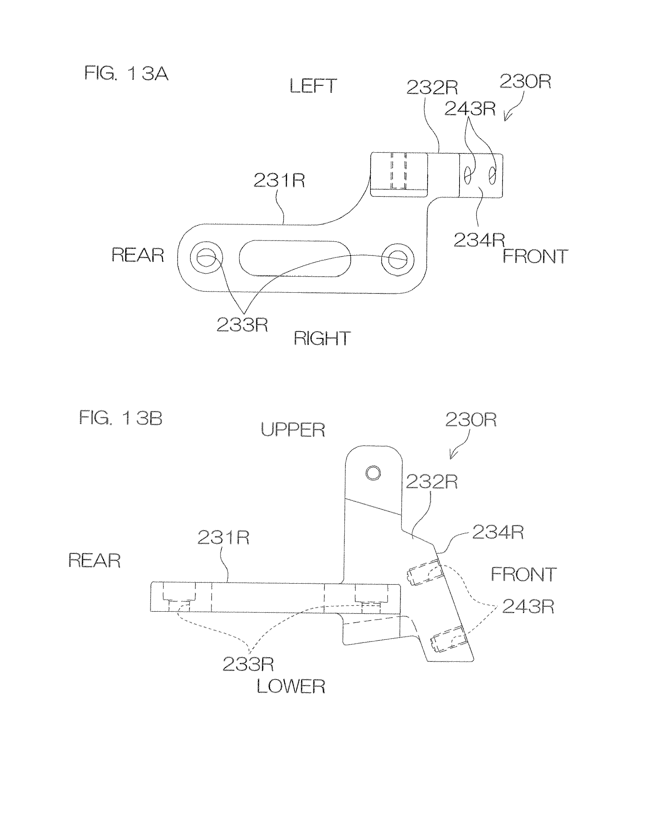

FIG. 13A is a plan view of the upper second seat portion 230R, and FIG. 13B is a right side view of the upper second seat portion 230R. The upper second seat portion 230R includes an upper second seat portion main body 231R and a projection 232R protruding from the upper second seat portion 230RL left forwardly. The upper second seat portion main body 231R is shaped like a plate slender in the front-rear direction X1. Through-holes 233R extending in the up-down direction Z1 are formed in the upper second seat portion main body 231R. In this embodiment, a plurality of through-holes 233R (for example, two) are formed apart from each other in the front-rear direction X1.

A forward end surface 234R of the projection 232R is formed in a plane that extends rearwardly obliquely upwardly. Upper third through-holes 243R are formed in the forward end surface 234R of the projection 232R. The upper third through-hole 243R is a screw hole. In this embodiment, a plurality of upper third through-holes 243R (for example, two) are formed apart from each other in the up-down direction Z1.

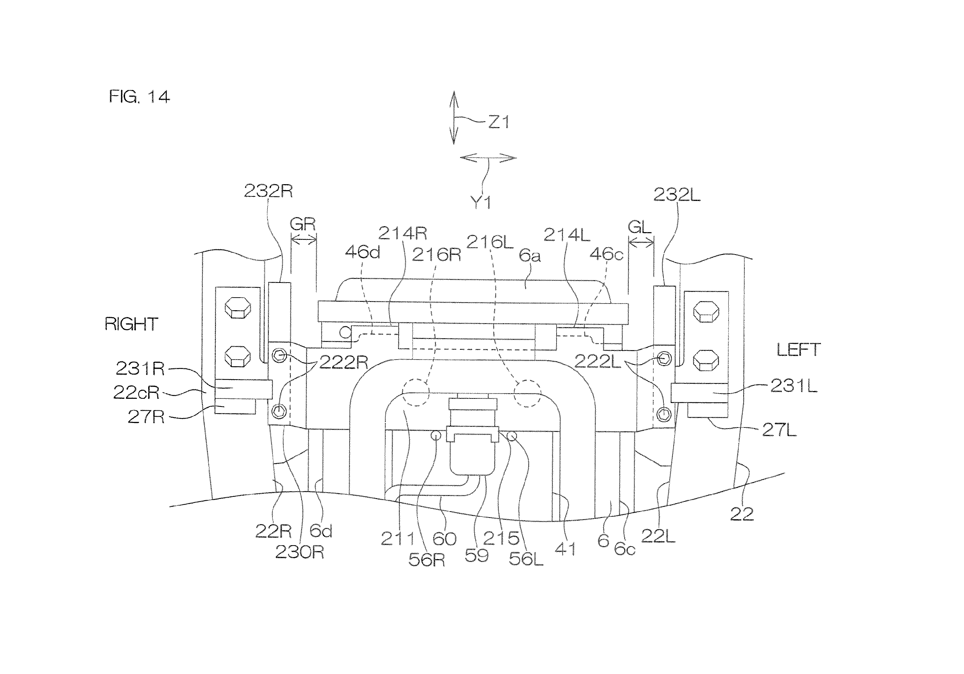

FIG. 14 is an enlarged view of a part of FIG. 11, showing surroundings of the upper portion 6a of the battery 6. The upper second seat portion main body 231L is disposed above the stay member 27L. The upper second seat portion main body 231L is fixed to the stay member 27L by use of, for example, a screw member, and is fixed to the left second frame portion 22L through the stay member 27L.

Likewise, the upper second seat portion main body 231R is disposed above the stay member 27R. The upper second seat portion main body 231R is fixed to the stay member 27R by use of, for example, a screw member, and is fixed to the right second frame portion 22R through the stay member 27R.

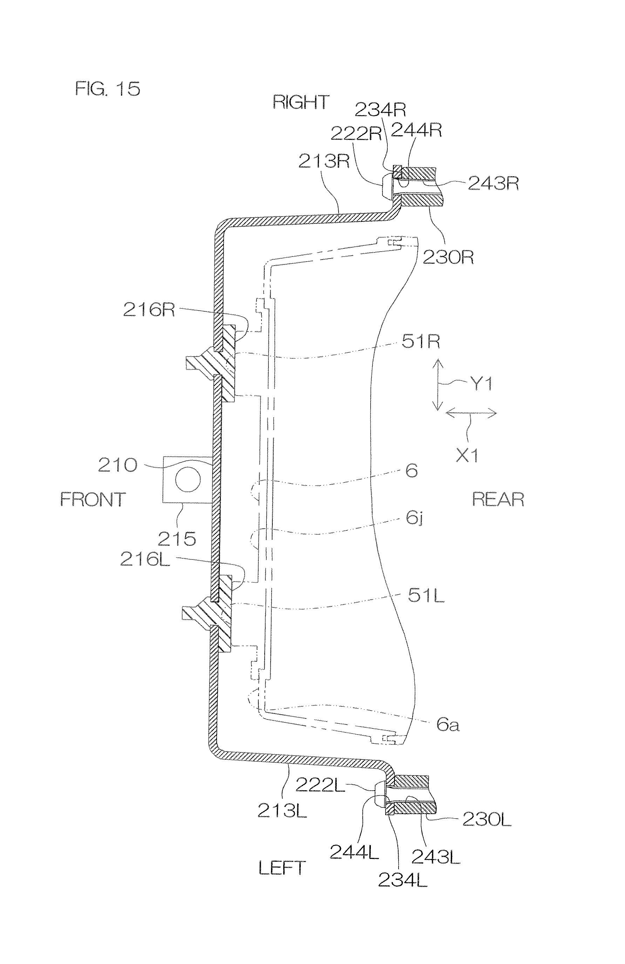

FIG. 15 is a sectional view along line XV-XV in FIG. 7, and shows the upper second bracket 210 and the upper second seat portions 230L and 230R viewed from above.

The upper second battery supporting portions 216L and 216R are in elastic contact, frombefore, with corresponding support projections 51L and 51R, respectively, of the battery 6. Accordingly, the upper second battery supporting portions 216L and 216R support the upper portion 6a (outer surface 6j) of the battery 6 elastically from before.
The upper second mounting portion 213L of the upper second bracket 210 is in contact with the forward end surface 234L of the upper second seat portion 230L. The upper fourth through-hole 244L of the upper second mounting portion 213L and the upper third through-hole 243L of the upper second seat portion 230L face each other in the front-rear direction X1.

The upper second mounting portion 213L is detachably attached to the upper second seat portion 230L by use of a second fixing member 222L. In this embodiment, the second fixing member 222L is a screw member.
The second fixing member 222L passes through the upper fourth through-hole 244L and the upper third through-hole 243L that coaxially face each other in the front-rear direction X1, and is screwed to the upper third through-hole 243L.

The upper second mounting portion 213R of the upper second bracket 210 is in contact with the forward end surface 234R of the upper second seat portion 230R. The upper fourth through-hole 244R of the upper second mounting portion 213R and the upper third through-hole 243R of the upper second seat portion 230R face each other in the front-rear direction X1.
The upper second mounting portion 213R is detachably attached to the second seat portion 230R by use of second fixing members 222R. In this embodiment, the second fixing member 222R is a screw member.

The second fixing member 222R passes through the upper fourth through-hole 244R and the upper third through-hole 243R that coaxially face each other in the front-rear direction X1, and is screwed to the upper third through-hole 243R.
As shown in FIG. 14, in this embodiment, a plurality of second fixing members 222L and 222R (for example, two, respectively) are disposed apart from each other in the up-down direction Z1.
The pressing portions 214L and 214R of the upper second bracket 210 are aligned with the upper portion 6a of the battery 6 in the front-rear direction X1, and press the first concaves 46c and 46d, respectively, from above.

The stoppers 56L and 56R formed at the front heat sink 41 of the battery 6 are pressed from above by the lower end of the upper second bracket main body 211. The upper second bracket 210, the stoppers 56L and 56R, and the pressing portions 214L and 214R make it possible to restrain the battery 6 from being displaced upwardly in the up-down direction Z1 when a great force that vibrates the battery 6 in the up-down direction Z1 acts on the second frame portion 22.

The projection 232L of the upper second seat portion 230L is disposed with a gap GL between the left side surface 6c of the battery 6 and the projection 232L. Likewise, the projection232Rof the upper second seat portion 230R is disposed with a gap GR between the right side surface 6d of the battery 6 and the projection 232R.
As a result of this structure, the projections 232L and 232R of the second seat portions 230L and 230R make it possible to restrain the battery 6 from being displaced in the right-left direction when a great force that vibrates the battery 6 in the right-left direction Y1 acts on the second frame portion 22. Therefore, the battery 6 can be reliably restrained from being excessively displaced in the right-left direction Y1.

The holder 215 of the upper second bracket 210 holds a connection terminal 59. In this embodiment, the connection terminal 59 is a connector used to charge the battery 6. A wire 60 extending from the connection terminal 59 extends toward the right second frame portion 22R.

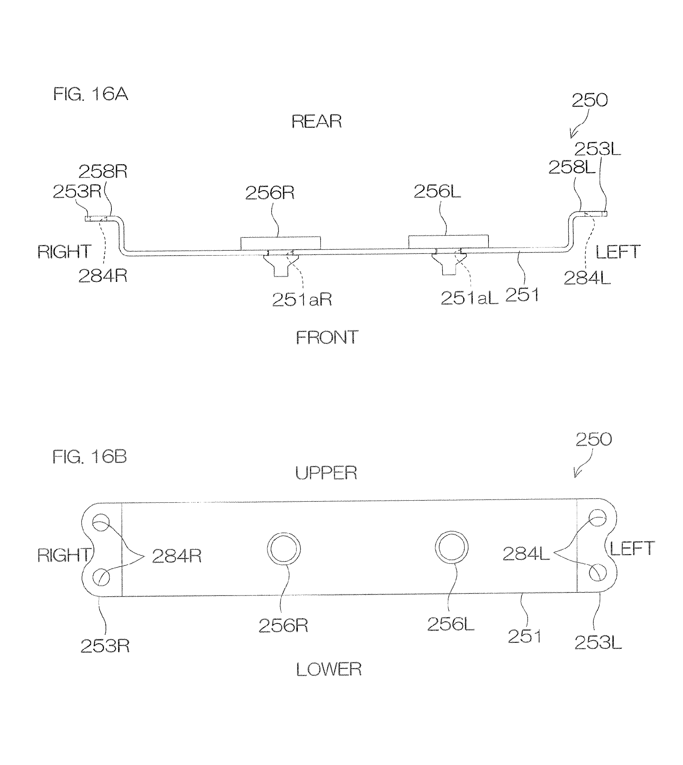

FIG. 16A is a plan view of the lower second bracket 250, and FIG. 16B is a front view of the lower second bracket 250. The lower second bracket 250 includes a plate-like lower second bracket main body 251 extending in the right-left direction Y1, lower second mounting portions 253L and 253R, and lower second battery supporting portions 256L and 256R. The lower second bracket main body 251, the lower second mounting portion 253L, and the lower second mounting portion 253R are integrally molded by use of a metallic plate.

The lower second mounting portion 253L extends from the left end of the lower second bracket main body 251 rearwardly. A halfway part of the lower second mounting portion 253L is bent, and the rear end 258L of the lower second mounting portion 253L extends in parallel with the lower second bracket main body 251. Lower fourth through-holes 284L are formed in the rear end 258L of the lower second mounting portion 253L. In this embodiment, a plurality of lower fourth through-holes 284L (forexample, two) are formed apart from each other in the up-down direction Z1.

The lower second mounting portion 253R extends from the right end of the lower second bracket main body 251 rearwardly. A halfway part of the lower second mounting portion 253R is bent, and the rear end 258R of the lower second mounting portion 253R extends in parallel with the lower second bracket main body 251. Lower fourth through-holes 284R are formed in the rear end 258R of the lower second mounting portion 253L. In this embodiment, a plurality of lower fourth through-holes 284R (forexample, two) are formed apart from each other in the up-down direction Z1.

The lower second battery supporting portions 256L and 256R are integrally-molded pieces made of an elastic member such as rubber. The lower second battery supporting portion 256L passes through the through-hole 251aL formed in the lower second bracket main body 251. The lower second battery supporting portion 256L is shaped like a disk behind the through-hole 251aL. The lower second battery supporting portion 256R passes through the through-hole 251aR formed in the lower second bracket main body 251. The lower second battery supporting portion 256R is shaped like a disk behind the through-hole 251aR. The lower second battery supporting portions 256L and 256R are disposed apart from each other in the right-left direction Y1.

As shown in FIG. 11, the lower second bracket 250 is disposed below the first mounting portions 103L and 103R. The lower second bracket 250 is detachably supported by the second frame portion 22 through the lower second seat portions 270L and 270R and the subframe 600. The lower second seat portions 270L and 270R are disposed at the left supporting unit 61L and the right supporting unit 61R, respectively.

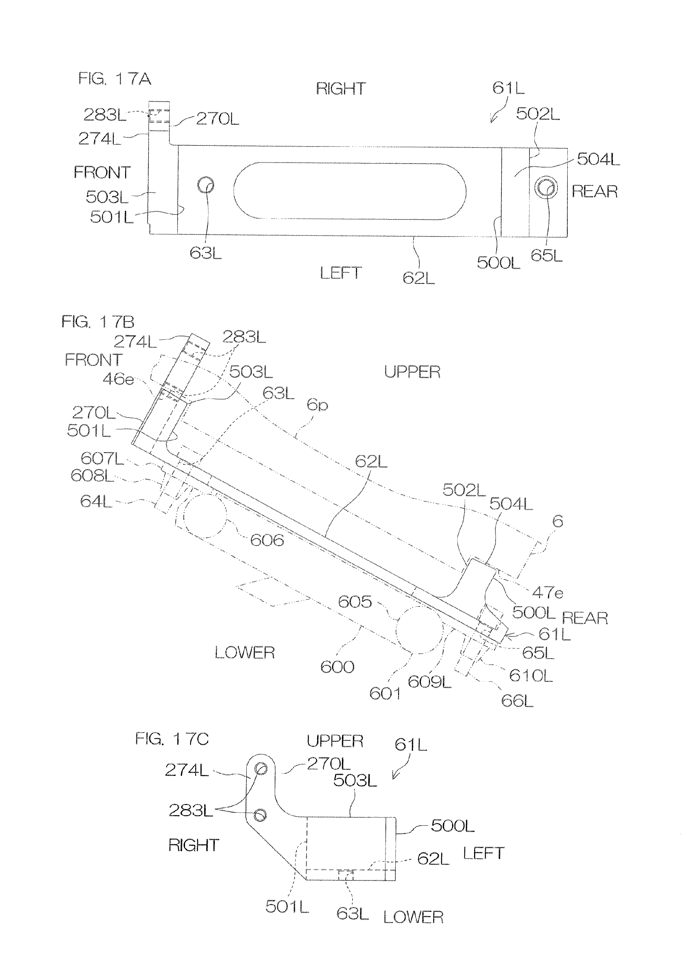

FIG. 17A is a plan view of the left supporting unit 61L, FIG. 17B is a left side view of the left supporting unit 61L, and FIG. 17C is a front view of the left supporting unit 61L.
The left supporting unit 61L is a metallic integrally-moldedpiecemadeof, for example, an aluminum alloy. The left supporting unit 61L includes a unit main body 62L, the lower second seat portion 270L, and a left fifth bracket 500L.

The unit main body 62L is shaped like a plate that slenderly extends in the front-rear direction X1. The lower second seat portion 270L extends from the front end of the unit main body 62L right upwardly. The forward end surface 274L of the lower second seat portion 270L is a flat surface that is directed forwardly. Lower third through-holes 283L are formed in the forward end surface 274L. The lower third through-hole 283L extends in the front-rear direction X1. In this embodiment, a plurality of lower third through-holes 283L (for example, two) are disposed apart from each other in the up-down direction Z1.

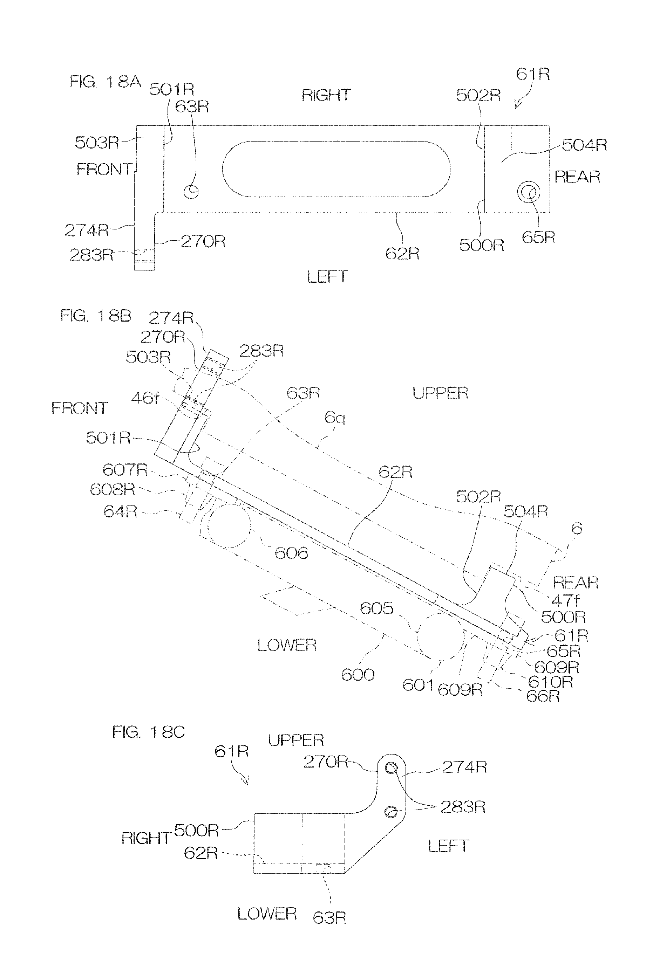

FIG. 18A is a plan view of the right supporting unit 61R, FIG. 18B is a left side view of the right supporting unit 61R, and FIG. 18C is a front view of the right supporting unit 61R.
The right supporting unit 61R is a metallic integrally-moldedpiecemade of, for example, analuminumalloy. The right supporting unit 61R includes a unit main body 62R, the lower second seat portion 270R, and a right fifth bracket 500R.

The unit main body 62R is shaped like a plate that slenderly extends in the front-rear direction X1. The lower second seat portion 270R extends from the front end of the unit main body 62R left upwardly. The forward end surface 274R of the lower second seat portion 270R is a flat surface that is directed forwardly. Lower third through-holes 283R are formed in the forward end surface 274R. The lower third through-hole 283R extends in the front-rear direction X1. In this embodiment, a plurality of lower third through-holes 283R (for example, two) are disposed apart from each other in the up-down direction Z1.

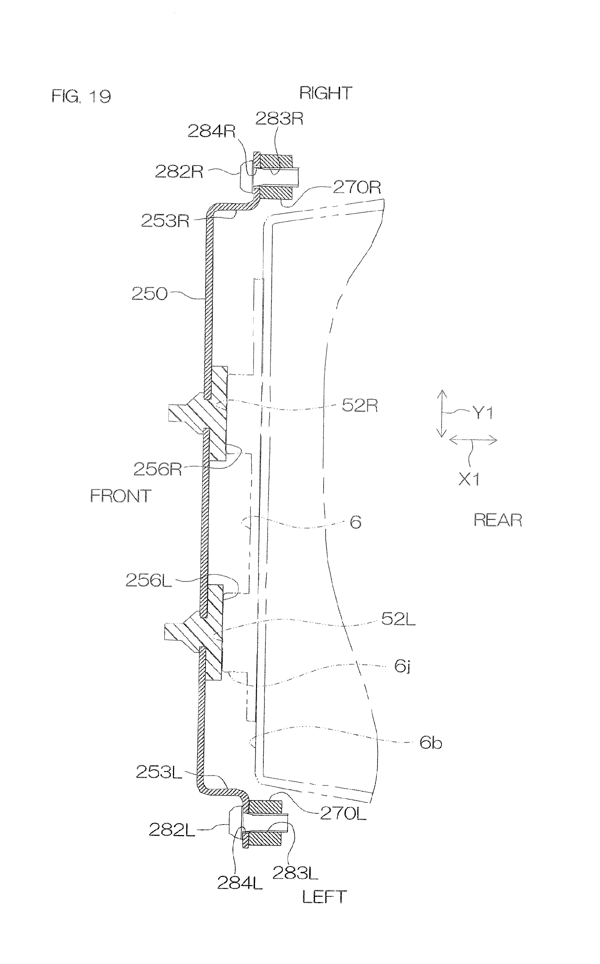

FIG. 19 is a sectional view of the main part along line XIX-XIX in FIG. 7, and shows the lower second bracket 250 and the lower second seat portions 270L and 270R viewed from above.
The lower second battery supporting portions 256L and 256R are in elastic contact, from before, with corresponding support projections 52L and 52R, respectively, of the battery 6. Accordingly, the lower second battery supporting portions 256L and 256R support the lower portion 6b (outer surface 6j) of the battery 6 elastically from before.

The lower second mounting portion 253L of the lower second bracket 250 is received by the lower second seat portion 270L. The lower fourth through-hole 284L of the lower second mounting portion 253L and the third through-hole 283L of the lower second seat portion 270L face each other in the front-rear direction X1.
The lower second mounting portion 253L is detachably attached to the lower second seat portion 270L by use of a lower second fixing member 282L. In this embodiment, the lower second fixing member 282L is a screw member.

The lower second fixing member 282L passes through the lower fourth through-hole 284L and the lower third through-hole 283L that coaxially face each other in the front-rear direction X1, andisscrewedtothethirdthrough-hole 283L.
The lower second mounting portion 253R of the lower second bracket 250 is received by the lower second seat portion 270R. The lower fourth through-hole 284R of the lower second mounting portion 253R and the lower third through-hole 283R of the lower second seat portion 270R face each other in the front-rear direction X1.

The lower secondmounting portion 253R is detachably attached to the lower second seat portion 270R by use of a lower second fixing member 282R. In this embodiment, the lower second fixing member 282R is a screw member.
The lower second fixing member 282R passes through the lower fourth through-hole 284R and the lower third through-hole 283R that coaxially face each other in the front-rear direction X1, and is screwed to the lower third through-hole 283R.

As shown in FIG. 11, in this embodiment, a plurality of second fixing members 222L and 222R (for example, two, respectively) are disposed apart from each other in the up-down direction Z1.
As a result of this structure, the first mounting portions 103L and 103R of the first bracket 100 are disposed between the upper end 6m and the lower end 6n of the battery 6 in the up-down direction Z1, and are detachably attached to the second frame portions 22L and 22R. The first mounting portion 103L of the first bracket 100 is disposed below the upper second mounting portion 213L of the upper second bracket 210 and above the lower second mounting portion 253L of the lower second bracket 250 in the up-down direction Z1. The first mounting portion 103R of the first bracket 100 is disposed below the upper second mounting portion 213R of the upper second bracket 210 and above the lower second mounting portion 253R of the lower second bracket 250 in the up-down direction Z1.

The upper second bracket 210 is disposed in front of the battery 6 between the upper end 6m and the lower end 6n of the battery 6. The upper second mounting portion 213L of the upper second bracket 210 is detachably attached to the upper end 22cL of the second frame portion 22L through the upper second seat portion 230L and the stay member 27L. The upper second mounting portion 213R of the upper second bracket 210 is detachably attached to the upper end 22cR of the second frame portion 22R through the upper second seat portion 230R and the stay member 27R.

The lower second bracket 250 is disposed in front of the battery 6 between the upper end 6m and the lower end 6n of the battery 6. The lower second mounting portion 253L of the lower second bracket 250 is detachably attached to the lower end 22aL of the second frame portion 22 through the lower second seat portion 270L and the subframe 600. The lower second mounting portion 253R of the lower second bracket 250 is detachably attached to the lower end 22aR of the second frame portion 22R through the lower second seat portion 270R and the subframe 600.

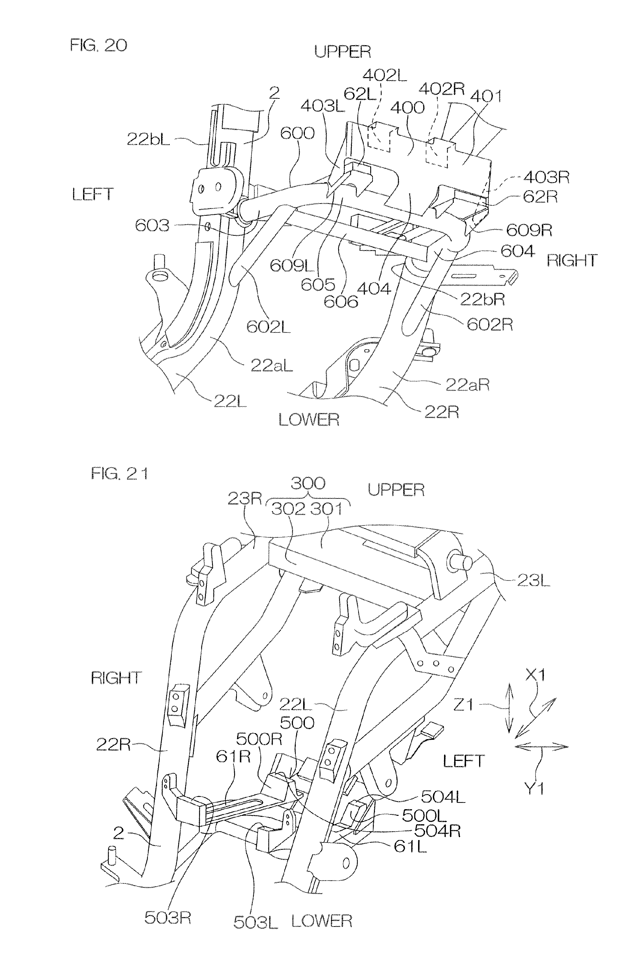

FIG. 20 is a perspective view of a main part around the subframe 600, and shows the subframe 600 viewed from rearwardly obliquely below. The subframe 600 is provided to reinforce the vehicle body frame 2 and to receive the load of the battery 6. The subframe 600 is disposed behind the lower end of the second frame portion 22.
The subframe main body 601 has the shape of the capital letter A as a whole, and is laterally symmetrical. The subframe main body 601 consists of a left portion 603, a right portion 604, a rear portion 605, and an intermediate portion 606. The left portion 603 extends rearwardly from the lower end 22aL of the second frame portion 22L. The right portion 604 extends rearwardly from the lower end 22aR of the second frame portion 22R. The rear portion 605 extends in the right-left direction Y1, and is connected to the rear end of the left portion 603 and to the rear end of the right portion 604. The intermediate portion 606 extends in the right-left direction Y1, and is connected to the left portion 603 and to the right portion 604.

The arm portion 602 consists of a left arm portion 602L and a right arm portion 602R. The left arm portion 602L extends from the left portion 603 forwardly obliquely downwardly, and is fixed to the lower end 22aL of the second frame portion 22L. The right arm portion 602R extends from the right portion 604 forwardly obliquely downwardly, and is fixed to the lower end 22aR of the second frame portion 22R.
As shown in FIG. 17B, a stay portion 607L is fixed to the intermediate portion 606 by, for example, welding. A nut member 608L is fixed to the lower side of the stay portion 607L. A screw member 64L that passes through the through-hole 63L of the left unit main body 62L and through the nut member 608L is provided. The screw member 64L is screwed to the nut member 608L.

A stay portion 609L is fixed to the rear portion 605 by, for example, welding. A nut member 610L is fixed to the lower side of the stay portion 609L. A screw member 66L that passes through the through-hole 65L of the left unit main body 62L and through the nut member 610L is provided. The screw member 66L is screwed to the nut member 610L.
The left supporting unit 61L is fixed to the subframe 600 by the screw members 64L and 66L. Accordingly, the left supporting unit 61L is not fixed to the subframe 600 by welding. As a result, the left supporting unit 61L can be prevented from being deformed by heat when the left supporting unit 61L is fixed to the subframe 600. Therefore, the left supporting unit 61L and the battery 6 can be prevented from having their inaccurate relative positions. Therefore, the battery 6 can be accurately disposed at an intended place.

As shown in FIG. 18B, a stay portion 607R is fixed to the intermediate portion 606 of the subframe main body 601 by, for example, welding. A nut member 608R is fixed to the lower side of the stay portion 607R. A screw member 64R that passes through a through-hole 63R of the right unit main body 62R, and through the nut member 608R is provided. The screw member 64R is screwed to the nut member 608R.

A stay portion 609R is fixed to the rear portion 605 by, for example, welding. A nut member 610R is fixed to the lower side of the stay portion 609R. A screw member 66R that passes through a through-hole 65R of the right unit main body 62R and through the nut member 610R is provided. The screw member 66R is screwed to the nut member 610R.
The right supporting unit 61R is fixed to the subframe 600 by means of the screw members 64R and 66R. Accordingly, the right supporting unit 61R is not fixed to the subframe 600 by welding. As a result, the right supporting unit 61R can be prevented from being deformed by heat when the right supporting unit 61R is fixed to the subframe 600. Therefore, the right supporting unit 61R and the battery 6 can be prevented from having their inaccurate relative positions. Therefore, the battery 6 can be accurately disposed at an intended place.

As shown in FIG. 7, the fifth bracket 500 is supported by the second frame portion 22 of the vehicle body frame 2 through the subframe 600, and supports the battery 6 from below the battery 6. The fifth bracket 500 supports the battery 6 in a state in which the battery 6 is inclined so that the upper end 6m of the battery 6 is located behind the lower end 6n of the battery 6. In other words, the fifth bracket 500 supports the battery 6 in a state in which the battery 6 is inclined rearwardly obliquely upwardly.

FIG. 21 is a perspective view showing a state in which the battery 6 has been detached from the vehicle body frame 2, viewed from obliquely before. The fifth bracket 500 includes the left fifth bracket 500L disposed at the left supporting unit 61L and the right fifth bracket 500R disposed at the right supporting unit 61R. A space is provided between the left fifth bracket 500L and the right fifth bracket 500R, so that the battery 6 is exposed downwardly. As a result, the battery 6 is efficiently cooled by a wind received while the two-wheeled electric vehicle 1 is traveling.

As shown in FIG. 17A and FIG. 17B, the left fifth bracket 500L is disposed behind the lower second seat portion 270L. The left fifth bracket 500L is provided to support a left end portion 6p of the battery 6 from below. The left fifth bracket 500L includes a front portion 501L and a rear portion 502L both of which protrude upwardly from the left unit main body 62.
The position of the front portion 501L coincides with that of the lower second seat portion 270L in the front-rear direction X1. The front portion 501L is disposed on the left side of the lower second seat portion 270L. The upper surface of the front portion 501L serves as a front receiving portion 503L. The front receiving portion 503L is one example of the "receiving portion of the fifth bracket" of the present invention. The front receiving portion 503L extends rearwardly obliquely downwardly.

The rear portion 502L is disposed near the rear portion 605 of the subframe main body 601. The upper surface of the rear portion 502L serves as a rear receiving portion 504L. The rear receiving portion 504L is one example of the "receiving portion of the fifth bracket" of the present invention. The rear receiving portion 504L extends rearwardly obliquely downwardly.
The front receiving portion 503L supports the third concave 46e of the lower end of the left front of the battery 6 from below. The rear receiving portion 504L supports the seventh concave 47e of the lower end of the left rear of the battery 6 from below.

As shown in FIG. 18A and FIG. 18B, the right fifth bracket 500R is provided to support a right end portion 6q of the battery 6 from below. The right fifth bracket 500 includes a front portion 501R and a rear portion 502R both of which protrude upwardly from the right unit main body 62R.
The position of the front portion 501R coincides with that of the lower second seat portion 270R in the front-rear direction X1. The front portion 501R is disposed on the right side of the lower second seat portion 270R. The upper surface of the front portion 501R serves as a front receiving portion 503R. The front receiving portion 503R is one example of the "receivingportionof the fifthbracket" of the present invent ion. The front receiving portion 503R extends rearwardly obliquely downwardly.

The rear portion 502R is disposed near the rear portion 605 of the subframe main body 601. The upper surface of the rear portion 502R serves as a rear receiving portion 504R. The rear receiving portion 504R is one example of the "receiving portion of the f i fth bracket" of the present invention. The rear receiving portion 504R extends rearwardly obliquely downwardly.
The front receiving portion 503R supports the fourth concave 46f of the lower end of the right front of the battery 6 from below. The rear receiving portion 504R supports the seventh concave 47f of the lower end of the right rear of the battery 6 from below.

As shown in FIG. 21, according to the above-mentioned structure, the four corners of the battery 6 can be supported from below by the four receiving portions 503L, 504L, 503R, and 504R.
The third bracket 300 is formed by, for example, applying press working to a metallic plate. The third bracket 300 is disposed between the third frame portions 23L and 23R in the right-left direction Y1. The third bracket 300 includes a third bracket main body 301 and a third battery supporting portion 302.

The third bracket main body 301 is shaped like a flat plate that extends substantially horizontally. Both the right and left ends of the third bracket main body 301 are fixed to (i.e., are supported by) the third frame portion 23L and the third frame portion 23R by, for example, welding.
The third battery supporting portion 302 is one example of the "battery supporting portion of the third bracket" of the present invention. The third battery supporting portion 302 extends from the front end of the third bracket main body 301 forwardly obliquely downwardly. The third battery supporting portion 302 is disposed in the whole area of the third frame portions 23L and 23R in the right-left direction Y1.

As shown in FIG. 7, the third battery supporting portion 302 is in contact with the support projections 53L and 53R (note that the support projection 53R is not shown in FIG. 7) of the battery 6, and supports the battery 6 from behind. The third battery supporting portion 302 is disposed so as to face the upper second battery supporting portions 216L and 216R (note that the upper second battery supporting portion 216R is not shown in FIG. 7) of the upper second bracket 210 with the battery 6 therebetween.
As shown in FIG. 20, the fourth bracket 400 is formed by, for example, applying press working to a metallic plate. The fourth bracket 400 is disposed at the rear portion 605 of the subframe main body 601. The fourth bracket 400 includes a fourth bracket main body 401, a fourth battery supporting portions 402L and 402R, a left connection portion 403L, a right connection portion 403R, and a lower connection portion 404.

The fourth bracket main body 401 is shaped like a rectangle that extends in the right-left direction Y1. The left connection portion 403L extends downwardly from the left end of the fourth bracket main body 401, and is fixed to the stay portion 609L by, for example, welding. The right connection portion 403R extends downwardly from the right end of the fourth bracket main body 401, and is fixed to the stay portion 609R by, for example, welding. The lower connection portion 404 extends downwardly from the fourth bracket main body 401, and is fixed to the rear portion 605 of the subframe main body 601 by, for example, welding. According to this structure, the fourth bracket 400 is supported by the second frame portions 22L and 22R through the subframe 600.

The fourth battery supporting portions 402L and 402R are one example of the "battery supporting portion of the fourth bracket" of the present invention. The fourth battery supporting portions 402L and 402R extend forwardly from the upper end portion of the fourth bracket main body. The fourth battery supporting portions 402L and 402R are shaped laterally symmetrically to each other.
As shown in FIG. 7, the battery supporting portions 402L and 402R (note that the battery supporting portion 402R is not shown in FIG. 7) are disposed in front of the fourth bracket main body 401. The fourth battery supporting portions 402L and 402R support the corresponding support projections 54L and 54R (note that the support projection 54R is not shown in FIG. 7) of the battery 6 from behind. The fourth battery supporting portions 402L and 402R are disposed so as to face the lower second battery supporting portions 256L and 256R of the lower second bracket 250 (note that the lower second battery supporting portion 256R is not shown in FIG. 7) with the battery 6 therebetween.

Next, a description will be given of an example of the operation of detaching the battery 6 and the operation of attaching the battery 6 in the two-wheeled electric vehicle 1.
To detach the battery 6 from the vehicle body frame 2, the rear cover 33 is first detached as shown in FIG. 11. As a result, the battery supporting device 57 and the battery 6 are exposed. In this embodiment, the seat 37 is not necessarily required to be detached although the seat 37 is beforehand detached from the seat supporting portion 102 of the first bracket 100 before detaching the battery 6.

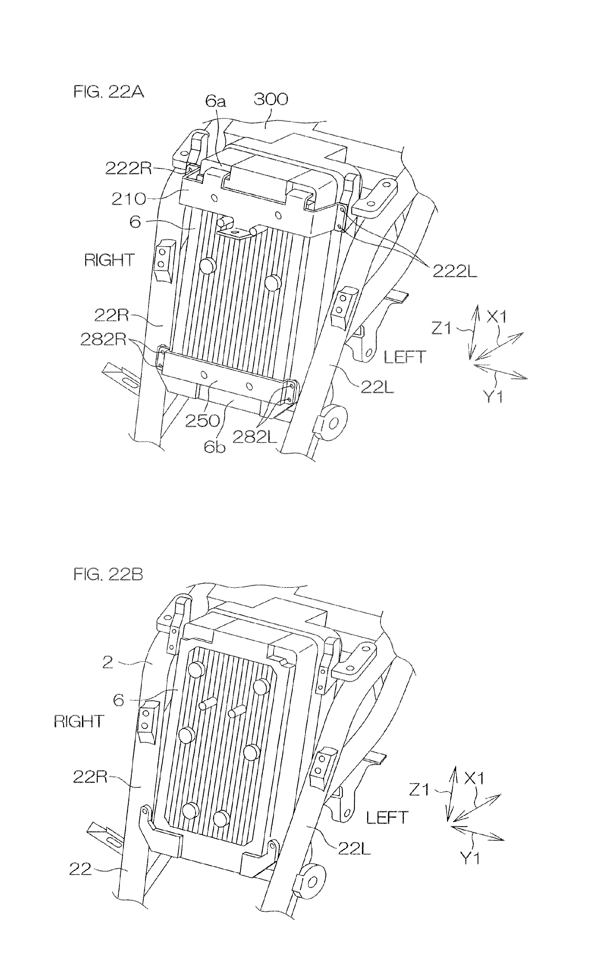

Thereafter, the first fixing members 111L and 111R are detached by use of tools (not shown). As a result, as shown in FIG. 22A, the first bracket 100 is detached from the second frame portions 22L and 22R. Furthermore, the second fixing members 222L and 222R and the second fixing members 282L and 282R are detached by use of the tools. As a result, as shown in FIG. 22B, the upper second bracket 210 and the lower second bracket 250 are detached from the second frame portions 22L and 22R.

As a result, a state is reached in which members that are obstacles to forwardly moving the battery 6 are not placed in front of the battery 6 (part of which is not shown). In this state, an operator displaces the battery 6 forwardly, and moves the battery 6 from the vehicle body frame 2 to a wide space in front of the second frame portion 22. As a result, the battery 6 is taken out as shown in FIG. 21.
On the other hand, when the battery 6 is attached to the vehicle body frame 2, process steps opposite to the above-mentioned process steps are performed. In more detail, the battery 6 is substantially horizontally moved rearwardly from the wide space in front of the second frame portion 22, and is put on the fifth bracket 500 (see FIG. 22B). In this state, the upper second bracket 210 is disposed in front of the upper portion 6a of the battery 6 as shown in FIG. 22A, and the lower second bracket 250 is disposed in front of the lower portion 6b of the battery 6. In this state, the second fixing members 222L and 222R and the second fixing members 282L and 282R are attached by use of the tools. As a result, the upper second bracket 210 and the lower second bracket 250 are attached to the second frame portions 22L and 22R.

Thereafter, as shown in FIG. 11, the first bracket 100 is allowed to face the central portion 6k of the battery 6. In this state, the first fixing members 111L and 111R are attached by use of tools (not shown). As a result, the first bracket 100 is attached to the second frame portions 22L and 22R. Thereafter, the seat 37 and the rear cover 33 are attached, and the replacement operation of the battery 6 is completed.

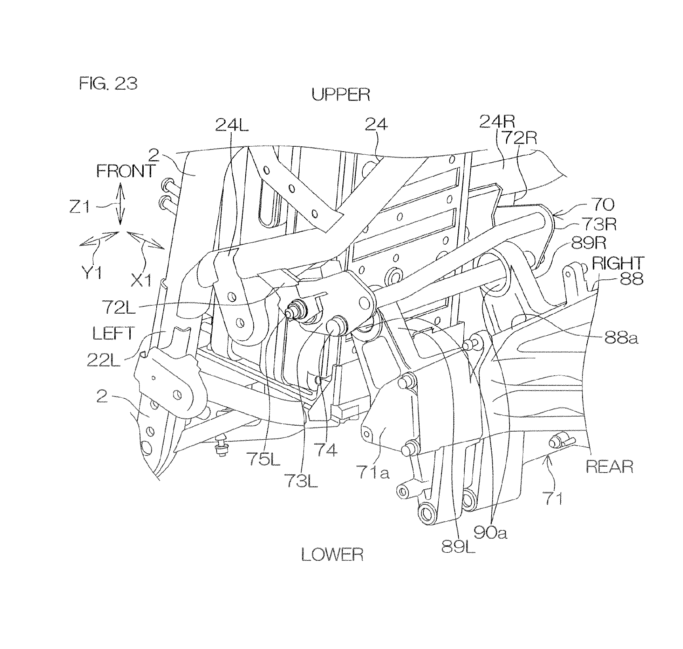

FIG. 23 is a perspective view showing a connecting mechanism 70 and a front end of a swing unit 71. The two-wheeled electric vehicle 1 includes the connecting mechanism 70 and the swing unit 71 swingably connected to the vehicle body frame 2 through the connecting mechanism 70.
The connecting mechanism 70 includes fixed portions 72L and 72R that are fixed to the left-and-right pair of fourth frame portions 24 (24L, 24R), movable portions 73L and 73R, a first pivot shaft 74, and second pivot shafts 75L and 75R. The first pivot shaft 74 and the second pivot shafts 75L and 75R are one example of the "pivot portion" of the present invention. The fixed portions 72L and 72R are plate members that are shaped like the letter U and that are opened downwardly.

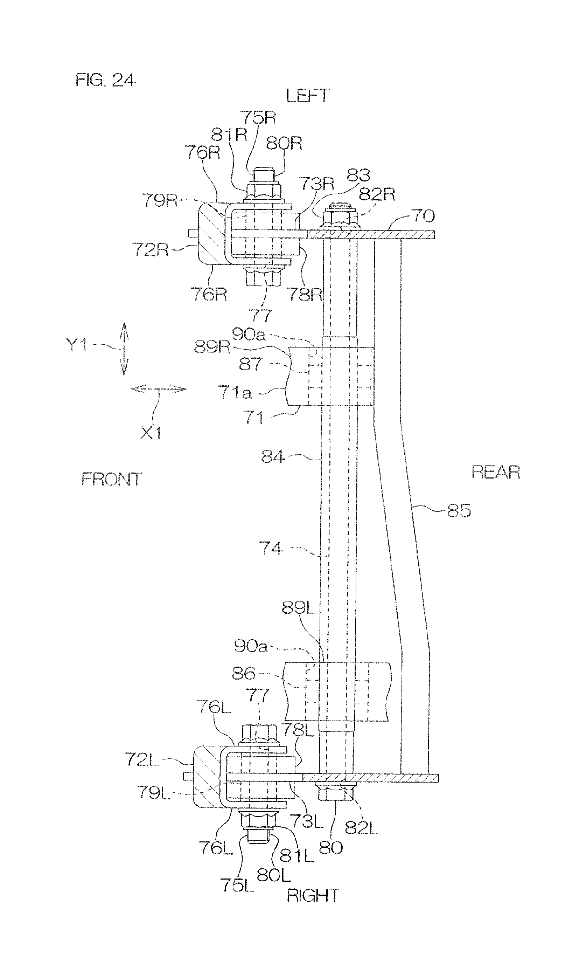

FIG. 24 is a partially sectional view of the front end of the connecting mechanism 70 and the front end of the swing unit 71, which are viewed from above. The left fixed portion 72L includes the left-and-right pair of plates 76L and 76L, and the right fixed portion 72R includes the left-and-right pair of plates 76R and 76R.
Through-holes 77 are formed in plates 76L and 76L of the fixed portion 72L, respectively. The plate-like movable portion 73L is disposed between the plates 76L and 76L. A hole is formed in the front of the movable portion 73L, and a reinforcement pipe 78L is fixed to this hole. A damper 79L and the second pivot shaft 75L are inserted in the reinforcement pipe 78L. The damper 79L is formed by use of a cylindrical elastic member such as rubber. The second pivot shaft 75 is a shaft part of a bolt member 80L, and passes through the through-hole 77 of the damper 79L and through the through-holes 77 of the plates 76L and 76L. A nut 81L is fastened with the bolt member 80L.

Through-holes 77 are formed in the plates 76R and 76R of the fixed portion 72R, respectively. The plate-like movable portion 73R is disposed between the plates 76R and 76R. A hole is formed in the front of the movable portion 73R, and a reinforcement pipe 78R is fixed to this hole. A damper 79R and the second pivot shaft 75R are inserted in the reinforcement pipe 78R. The damper 79R is formed by use of a cylindrical elastic member such as rubber. The second pivot shaft 75R is a shaft part of a bolt member 80R, and passes through the through-hole 77 of the damper 79R and through the through-holes 77 of the plates 76R and 76R. The second pivot shafts 75L and 75R are disposed coaxially. A nut 81R is fastened with the bolt member 80R.

Through-holes 82L and 82R are formed in the rear of the movable portions 73L and 73R, respectively. The first pivot shaft 74 is inserted in the through-holes 82L and 82R. The first pivot shaft 74 is a shaft part of the bolt member 80. A nut 83 is fastened with the bolt member 80. A cylindrical collar 84 is fit to the first pivot shaft 74. The collar 84 is disposed between the movable portions 73L and 73R. A reinforcement bar 85 is disposed adjacent to the collar 84 between the movable portions 73L and 73R. Connection rigidity between the movable portions 73L and 73R is secured by the collar 84 and the reinforcement bar 85. A pair of bearings 86 and 87 are attached to the outer periphery of the collar 84. These bearings 86 and 87 are attached to the front end 71a of the swing unit 71.

According to this structure, the movable portions 73L and 73R can swing around the second pivot shafts 75L and 75R, respectively, within a range in which the dampers 79L and 79R are elastically deformable. In other words, the swing unit 71 can swing around each of the second pivot shafts 75L and 75R within a range in which the dampers 79L and 79R are elastically deformable. Additionally, the swing unit 71 can swing around the first pivot shaft 74. In this embodiment, the angular range in which the swing unit 71 can swing around the first pivot shaft 74 may be 10-odd degrees, or the angular range in which the swing unit 71 can swing around the second pivot shafts 75L and 75R may be several degrees.

As shown in FIG. 23, the swing unit 71 includes a motor case 88 and inclined portions 89L and 89R formed at the front end of the motor case 88. The front end 71a of the swing unit 71 includes a front end 88a of the motor case 88 and the inclined portions 89L and 89R. The inclined portions 89L and 89R are aligned with each other in the right-left direction Y1.
Each of the inclined portions 89L and 89R extends from the motor case 88 forwardly obliquely upwardly. A through-hole 90a is formed in the front end of each of the inclined portions 89L and 89R. As shown in FIG. 24, the corresponding bearings 86 and 87 are attached to the through-holes 90a and 90a, respectively. This allows the inclined portions 89L and 89R (swing unit 71) to swing around the first pivot shaft 74.

Referring to FIG. 1, the swing unit 71 is connected to the third frame portion 23 through a shock absorber 90. As a result, it is possible to attenuate and absorb shocks given when the swing unit 71 swings on a first pivot shaft 51 by means of the shock absorber 90.
As described above, according to this embodiment, it is possible to synergistically realize improvement in workability when the battery 6 is installed and uninstalled, maintenance of comfort during riding on the two-wheeled electric vehicle 1, and further improvement in capacity of the battery 6.

More specifically, when the battery 6 is attached and detached, an operator detaches the first bracket and the upper and lower second brackets 100, 210, and 250 from the second frame portion 22 of the vehicle body frame 2. As a result, when the battery 6 is moved for attachment and detachment, the battery 6 never comes into contact with the first bracket and the upper and lower second brackets 100, 210, and250. Therefore, there is no need to reduce the battery 6 in size in order not to bring the battery 6 into contact with the first bracket and with the upper and lower second brackets 100, 210, and 250 when the battery 6 is moved for attachment and detachment, and therefore the battery 6 can be enlarged in size.

Moreover, the battery 6 can be easily attached and detached even if the battery 6 is enlarged in size. More specifically, the first bracket and the upper and lower second brackets 100, 210, and 250 are first detached from the second frame portion 22 when the battery 6 is attached and detached. As a result, a space below the seat 37, i.e., a containing space S1 in which the battery 6 is contained is opened forwardly. Therefore, the battery 6 can be moved in the front-rear direction X1 with respect to the vehicle body frame 2 without being obstructed by the first bracket and the upper and lower second brackets 100, 210, and 250. As a result, the battery 6 can be attached and detached. Therefore, when the battery 6 is attached and detached, there is no need to perform an operation to move the large-sized, heavy battery 6 upwardly and downwardly at a high position near the upper surface 37b of the seat 37. Therefore, it is possible to improve workability when the battery 6 is attached and detached.

Moreover, when the battery 6 is attached and detached, it is possible to use a wide space that is defined in front of the seat 37 and above the feet-putting portion 34 and in which the feet of a driver are put. Therefore, the battery 6 can be more easily attached and detached. As described above, the first bracket and the upper and lower second brackets 100, 210, and 250 can be attached and detached to and from the vehicle body frame 2, and, as a result, it is possible to synergistically and effectively realize enlargement of the battery 6 and improvement in workability during attachment/detachment of the battery 6.

Additionally, the battery 6 is fixed by each of the upper and lower second brackets 210 and 250 placed in front of the battery 6. Still additionally, the battery 6 is fixed by the first bracket 100 placed in front of the battery 6. Still additionally, the battery 6 is fixed by the third and fourth brackets 300 and 400 placed behind the battery 6 and by the fifth bracket 500 placed below the battery 6.

In other words, this is not an arrangement in which the battery 6 is fixed by a housing cover, unlike the arrangement disclosed by Japanese Unexamined Patent Publication No. 2004-74911 shown as Patent Literature 2. Therefore, an arrangement space for the housing cover becomes unnecessary, and, correspondingly, the capacity of the battery 6 can be made greater resulting from the enlargement of the battery 6.
As described above, the battery 6 is supported by the first bracket and the upper and lower second brackets 100, 210, and 250, which are fixed to the vehicle body frame 2, from in front thereof. Additionally, the battery 6 is supported by the third and fourth brackets 300 and 400, which are fixed to the vehicle body frame 2, from therebehind. Still additionally, the battery 6 is supported by the fifth bracket 500, which is fixed to the vehicle body frame 2, from therebelow.

Therefore, a space between the right and left two second frames 22L and 22R can be greatly used as a space in which the battery 6 is disposed. Moreover, a member is not indispensable for pressing and holding the battery 6 from the upper side (i.e., upper end surface 6e), the left side (i.e., left side surface 6c), and the right side (i.e., right side surface 6d) of the battery 6. Therefore, even if the battery 6 is enlarged in size, the seat 37 can be restrained from being increased in height, and a feet-putting space placed in front of the battery 6 can be restrained from being reduced. As a result, it is possible to synergistically and effectively realize enlargement of the battery 6 and maintenance of comfort of the two-wheeled electric vehicle 1 without being impaired.

As described above, the battery 6 can be disposed below the seat 37, and the first bracket 100 supporting the seat 37 and the second bracket 200 fixing the battery 6 can be attached and detached to and from the frame 2. As a result, it is possible to synergistically realize improvement in workability when the battery 6 is installed and uninstalled, maintenance of comfort during riding on the two-wheeled electric vehicle 1, and further improvement in capacity of the battery 6 by being enlarged in size.

Additionally, the upper end 6m of the battery 6 is disposed above the lower end 37d of the seat 37 and below the upper surface 37b of the seat 37 when viewed laterally. As a result, a part (the upper end 6m) of the battery 6 can be disposed in a space defined in the concave 37c of the seat 37. As a result, the overall length of the battery 6 can be made longer, and hence the battery 6 can be enlarged in size without heightening the position of the upper surface 37b of the seat 37.

Additionally, the first bracket 100 is provided with the battery supporting portions 106L and 106R. As a result, the first bracket 100 supporting the seat 37 can be used also as a bracket supporting the battery 6.
Additionally, the battery supporting portions 106L and 106R of the first bracket 100 support the central portion 6k in the up-down direction of the battery 6. As a result, the battery 6 can be supported at a place at which the gravity center GC and a position in the up-down direction Z1 of the battery 6 are close to each other. Therefore, the battery 6 can be supported more stably.

Additionally, the upper portion 6a, the central portion 6k, and the lower portion 6b of the battery 6 can be supported by the three brackets, i.e., by the upper second bracket 210, the lower second bracket 250, and the first bracket 100 from in front. Therefore, the battery 6 can be fixed more reliably.
Additionally, the pressing portions 214L and 214R of the upper second bracket 210 press and hold the corresponding concaves 46c and 46d of the battery 6 from above. As a result, the battery 6 can be supported by the pressing portions 214L and 214R so as not to vibrate upwardly and downwardly.

Additionally, the upper portion 6a of the battery 6 can be received by the thirdbracket 300 from behind. Therefore, the battery 6 can be fixed to the vehicle body frame 2 more firmly so as not to move forwardly and rearwardly.
Additionally, the lower portion 6b of the battery 6 is received by the fourth bracket 400 from behind, and, as a result, the battery 6 can be attached to the vehicle body frame 2 more firmly so as not to move forwardly and rearwardly.

Additionally, each of the battery supporting portions 106L, 106R; 216L, 216R; 256L, 256R of the first bracket 100, the upper second bracket 210, and the lower second bracket 250 is made of an elastic member, and elastically presses and holds the outer surface 6j of the battery 6. The battery 6 is pressed and held by the elastic member in this way, and therefore it is possible to restrain shocks and noises caused by the fact that the battery 6 vibrates with respect to the first bracket 100, the upper second bracket 210, and the lower second bracket 250.

Additionally, the fifth bracket 500 supports the battery 6 from below, and therefore the battery 6 that is a heavy component can be stably supported. Additionally, the battery 6 can be reliably supported when a vibrating force in the up-down direction Z1, which has high occurrence frequency in the two-wheeled electric vehicle 1, acts on the battery 6.
Moreover, the fifth bracket 500 supports the battery 6 in a posture in which the battery 6 is inclined so that the upper end 6m of the battery 6 is positioned more rearwardly than the lower end 6n of the battery 6. As a result, the length in the height direction of the battery 6 can be increased without heightening the position of the seat 37. Additionally, the upper end 6m of the battery 6 can be disposed more rearwardly. Therefore, the battery 6 can be disposed so as not to easily touch driver's thighs.

Additionally, the front receiving portions 503L and 503R and the rear receiving portions 504L and 504R of the fifth bracket 500 are inclined in such a manner as to extend rearwardly and obliquely downwardly. As a result, when the battery 6 is placed at the receiving portions 503L, 503R; 504L, 504R, the battery 6 can be disposed in a naturally inclined direction, and therefore the battery 6 is easily positioned when installed.
Additionally, the battery 6 is disposed so as to be inclined rearwardly and obliquely upwardly. As a result, the receiving portions 503L, 503R; 504L, and 504R can be disposed so as to take the front-rear direction X1 intersecting with the direction of action of vibrations in the up-down direction Z1 having high occurrence frequency in the two-wheeled electric vehicle 1. As a result, a shock from the fifth bracket 500 to the battery 6 that is long in the up-down direction Z1 can be reduced, and therefore vibrations of the battery 6 can be reduced.

Additionally, the first bracket 100 can be easily attached and detached to and from the vehicle body frame 2 by performing a simple operation to attach and detach the first fixing members 111L and 111R.
In other words, the first bracket 100 can be easily fixed to the vehicle body frame 2 by performing a simple operation to insert the first fixing members 111L and 111R into the corresponding first and second through-holes 121L, 122L; 121R, 122R.

Moreover, the first bracket 100 can be easily fixed to the vehicle body frame 2 by performing a simple operation to insert the first fixing members 111L and 111R into the first and second through-holes 121L, 122L; 121R, 122R corresponding along the front-rear direction X1.
Additionally, the second brackets 210 and 250 can be easily attached and detached to and from the vehicle body frame 2 by performing a simple operation to attach and detach the second fixing members 222L, 222R; 282L, 282R.

In other words, the second brackets 210 and 250 can be easily fixed to the vehicle body frame 2 by performing a simple operation to insert the second fixing members 222L; 222R; 282L; 282R into the corresponding third and fourth through-holes 243L, 244L; 243R, 244R; 283L, 284L; 283R, 284R.
Moreover, the second bracket 200 can be easily fixed to the vehicle body frame 2 by performing a simple operation to insert the second fixing members 222L; 222R; 282L; 282R into the third and fourth through-holes 243L, 244L; 243R, 244R; 283L, 284L; 283R, 284R corresponding along the front-rear direction X1.

### <Second Embodiment>

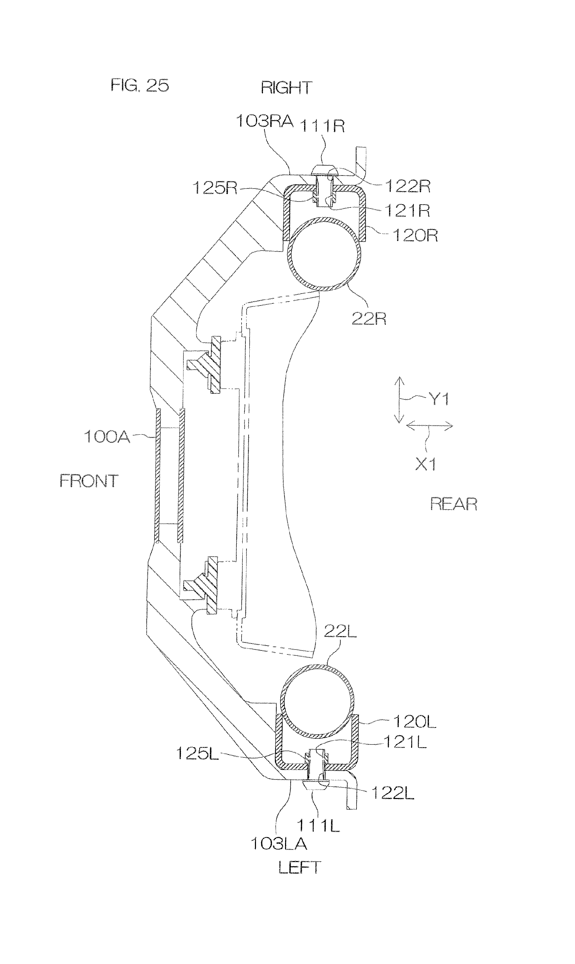

FIG. 25 is a sectional view of a main part of a second embodiment of the present invention viewed from above. Differences between the first embodiment and the second embodiment will be chiefly described hereinafter. The same reference sign is given to the same component as in the first embodiment, and a description of the same component is omitted.

In the second embodiment, the first fixing members 111L and 111R are disposed so as to be directed in the right-left direction Y1. More specifically, the second through-hole 122L of the first mounting portion 103LA of the first bracket 100A is directed in the right-left direction Y1. The first seat portion 120L protrudes leftwardly from the second frame portion 22L. In the first seat portion 120L, the first through-hole 121L of the first nut member 125L is directed in the right-left direction Y1. The second through-hole 122L and the first through-hole 121L are arranged so as to face each other in the right-left direction Y1.

Likewise, the second through-hole 122R of the first mounting portion 103RA of the first bracket 100A is directed in the right-left direction Y1. The first seat portion 120R protrudes rightwardly from the second frame portion 22R. In the first seat portion 120R, the first through-hole 121R of the first nut member 125R is directed in the right-left direction Y1. The second through-hole 122R and the first through-hole 121R are arranged so as to face each other in the right-left direction Y1.

According to this embodiment, the first bracket 100A can be easily fixed to the vehicle body frame 2 by performing a simple operation to insert the first fixing members 111L and 111R into the corresponding first and second through-holes 121L, 122L; 121R, 122R along the right-left direction Y1.

### <Third Embodiment>

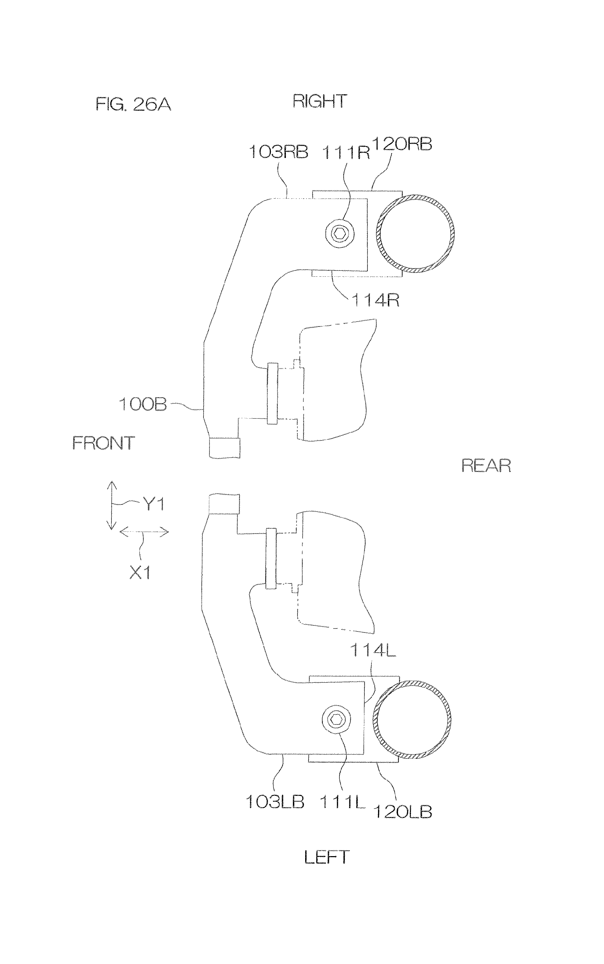

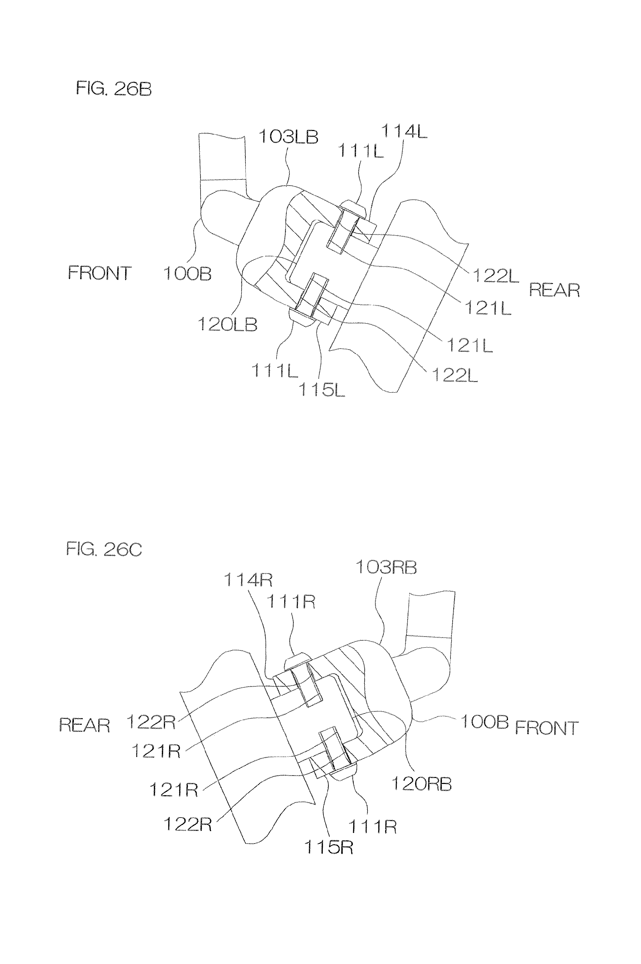

FIG. 26A is a plan view of a main part of a third embodiment of the present invention. FIG. 26B is a partially-cutaway left side view of the main part of the third embodiment of the present invention. FIG. 26C is a partially-cutaway right side view of the main part of the third embodiment of the present invention.

In the third embodiment, the first fixing members 111L and 111R are disposed so as to be directed in the up-down direction Z1 as shown in FIG. 26A and FIG. 26B.
The rear end of the first mounting portion 103LB, which is a left-hand one, of the first bracket 100B is shaped so as to diverge in the up-down direction Z1, and includes an upper portion 114L and a lower portion 115L. The first seat portion 120LB is disposed between the upper portion 114L and the lower portion 115L. First through-holes 121L and 121L arranged in the up-down direction Z1 are formed in the first seat portion 120LB.

The second through-hole 122L and the first through-hole 121L corresponding to the second through-hole 122L of the upper portion 114L are arranged so as to face each other in the up-down direction Z1. The first fixing member 111L is inserted into these through-holes 122L and 121L from above. The second through-hole 122L and the first through-hole 121L corresponding to the second through-hole 122L of the lower portion 115L are arranged so as to face each other in the up-down direction Z1. The first fixing member 111L is inserted into these through-holes 122L and 121L from below.

As shown in FIG. 26A and FIG. 26C, the rear end of the first mounting portion 103RB, which is a right-hand one, of the first bracket 100B is shaped so as to diverge in the up-down direction Z1, and includes an upper portion 114R and a lower portion 115R. The first seat portion 120RB is disposed between the upper portion 114R and the lower portion 115R. First through-holes 121R and 121R arranged in the up-down direction 21 are formed in the first seat portion 120RB.

The second through-hole 122R and the first through-hole 121R corresponding to the second through-hole 122R of the upper portion 114R are arranged so as to face each other in the up-down direction Z1. The first fixing member 111R is inserted into these through-holes 122R and 121R from above. The second through-hole 122R and the first through-hole 121R corresponding to the second through-hole 122R. of the lower portion 115R are arranged so as to face each other in the up-down direction Z1. The first fixing member 111R is inserted into these through-holes 122R and 121R from below.

According to this embodiment, the first bracket 100B can be easily fixed to the vehicle body frame 2 by performing a simple operation to insert the first fixing members 111L and 111R into the corresponding first and second through-holes 121L, 122L; 121R, 122R along the up-down direction Z1.

### <Fourth Embodiment>

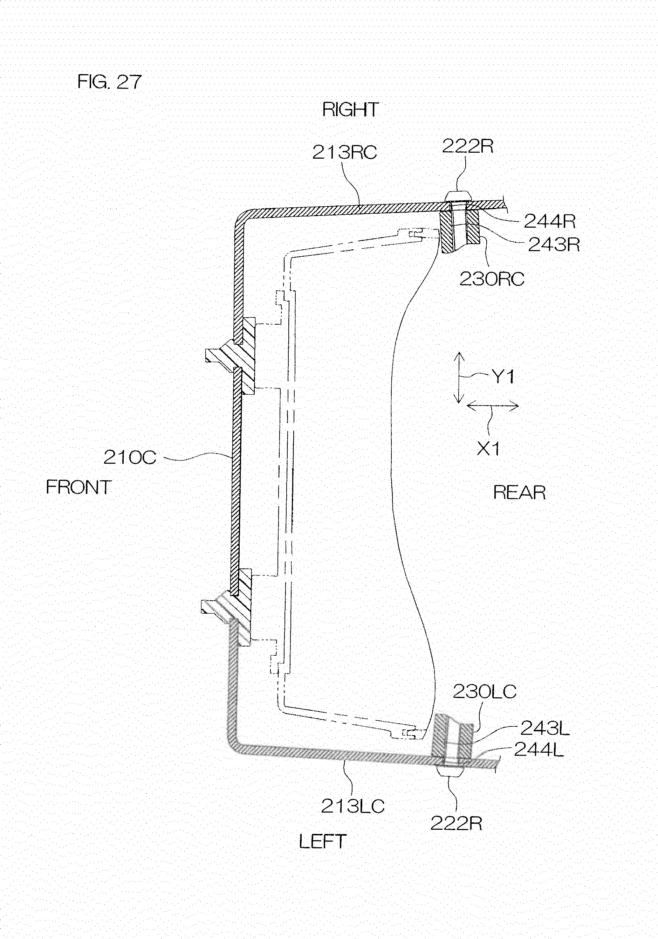

FIG. 27 is a sectional view of a main part of a fourth embodiment of the present invention viewed from above.

In the fourth embodiment, the upper second fixing members 222L and 222R are disposed so as to be directed in the right-left direction Y1. More specifically, the fourth through-hole 244L of the upper second mounting portion 213LC, which is a left-hand one, of the upper second bracket 210C is directed in the right-left direction Y1. The upper second seat portion 230LC is directed toward the left side. The third through-hole 243L of the upper second seat portion 230LC is directed in the right-left direction Y1. The fourth through-hole 244L and the third through-hole 243L are arranged so as to face each other in the right-left direction Y1.

Likewise, the fourth through-hole 244R of the upper second mounting portion 213RC, which is a right-hand one, of the upper second bracket 210C is directed in the right-left direction Y1. The upper second seat portion 230RC is directed toward the right side. The third through-hole 243R of the upper second seat portion 230RC is directed in the right-left direction Y1. The fourth through-hole 244R and the third through-hole 243R are arranged so as to face each other in the right-left direction Y1.
According to this embodiment, the upper second bracket 210C can be easily fixed to the vehicle body frame 2 by performing a simple operation to insert the upper second fixing members 222L and 222R into the corresponding third and fourth through-holes 243L, 244L; 243R, 244R along the right-left direction Y1.

The lower second fixing members 282L and 282R to fix the lower second bracket 250 may be disposed so as to be directed in the right-left direction Y1 in the same manner as above. An arrangement in which the lower second fixing members 282L and 282R are disposed so as to be directed in the right-left direction Y1 is the same as in the fourth embodiment, and therefore a detailed description of this arrangement is omitted.

### <Fifth Embodiment>

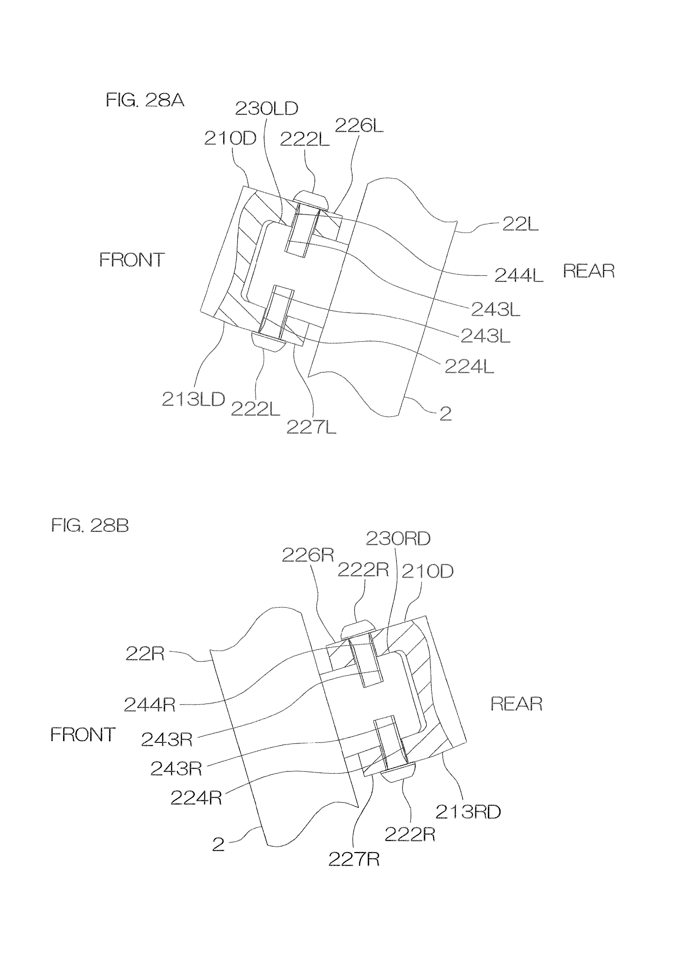

FIG. 28A is a partially-cutaway left side view of a main part of a fifth embodiment of the present invention. FIG. 28B is a partially-cutaway right side view of the main part of the fifth embodiment of the present invention. In the fifth embodiment, the upper second fixing members 222L and 222R are disposed so as to be directed in the up-down direction Z1.

As shown in FIG. 28A, the rear end of the upper second mounting portion 213LD, which is a left-hand one, of the upper second bracket 210D is shaped so as to diverge in the up-down direction Z1, and includes an upper portion 226L and a lower portion 227L. The upper second seat portion 230LD is inserted between the upper portion 226L and the lower portion 227L. Fourth through-holes 244L and 244L arranged in the up-down direction Z1 are formed in the upper second seat portion 230LD.

The fourth through-hole 244L and the third through-hole 243L corresponding to the fourth through-hole 244L of the upper portion 226L are arranged so as to face each other in the up-down direction Z1. The upper second fixing member 222L is inserted into these through-holes 244L and 243L from above. The fourth through-hole 244L and the third through-hole 243L corresponding to the fourth through-hole 244L of the lower portion 227L are arranged so as to face each other in the up-down direction Z1. The upper second fixing member 222L is inserted into these through-holes 244L and 243L from below.

As shown in FIG. 28B, the rear end of the upper second mounting portion 213RD, which is a right-hand one, of the upper second bracket 210D is shaped so as to diverge in the up-down direction Z1, and includes an upper portion 226R and a lower portion 227R. The upper second seat portion 230RD is inserted between the upper portion 226R and the lower portion 227R. Third through-holes 243R and 243R arranged in the up-down direction Z1 are formed in the upper second seat portion 230RD.

The fourth through-hole 244R and the third through-hole 243R of the upper portion 226R are arranged so as to face each other in the up-down direction Z1. The upper second fixing member 222R is inserted into these through-holes 244R and 243R from above. The fourth through-hole 244R of the lower portion 227R and the third through-hole 243R are arranged so as to face each other in the up-down direction Z1. The upper second fixing member 222R is inserted into these through-holes 244R and 243R from below.

According to this embodiment, the upper second bracket 210D can be easily fixed to the vehicle body frame 2 by performing a simple operation to insert the upper second fixing members 222L and 222R into the corresponding fourth and third through-holes 244L, 243L; 244R, 243R along the up-down direction Z1.
The lower second fixing members 282L and 282R to fix the lower second bracket 250 may be disposed so as to be directed in the up-down direction Z1 in the same manner as above. An arrangement in which the lower second fixing members 282L and 282R are disposed so as to be directed in the up-down direction Z1 is the same as in the fifth embodiment, and therefore a detailed description of this arrangement is omitted.

### <Sixth Embodiment>

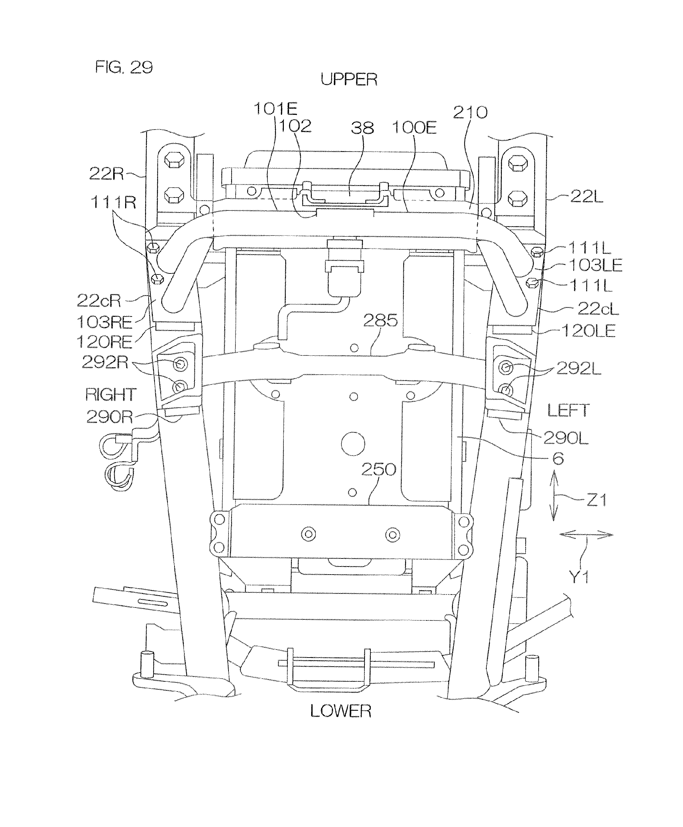

FIG. 29 is a front view of a main part of a sixth embodiment of the present invention. The following two points are chiefly mentioned as differences between the sixth embodiment and the first embodiment. In other words, the sixth embodiment differs from the first embodiment in the fact that (1) the battery supporting portion that supports the battery 6 is omitted in the first bracket 100E and in the fact that (2) an intermediate second bracket 285 is additionally provided.

The intermediate second bracket 285 is disposed between the upper second bracket 210 and the lower second bracket 250 in the up-down direction Z1. The intermediate second bracket 285 is detachably fixed to intermediate second seat portions 290L and 290R disposed at the second frame portions 22L and 22R by use of intermediate second fixing members 292L and 292R, respectively.

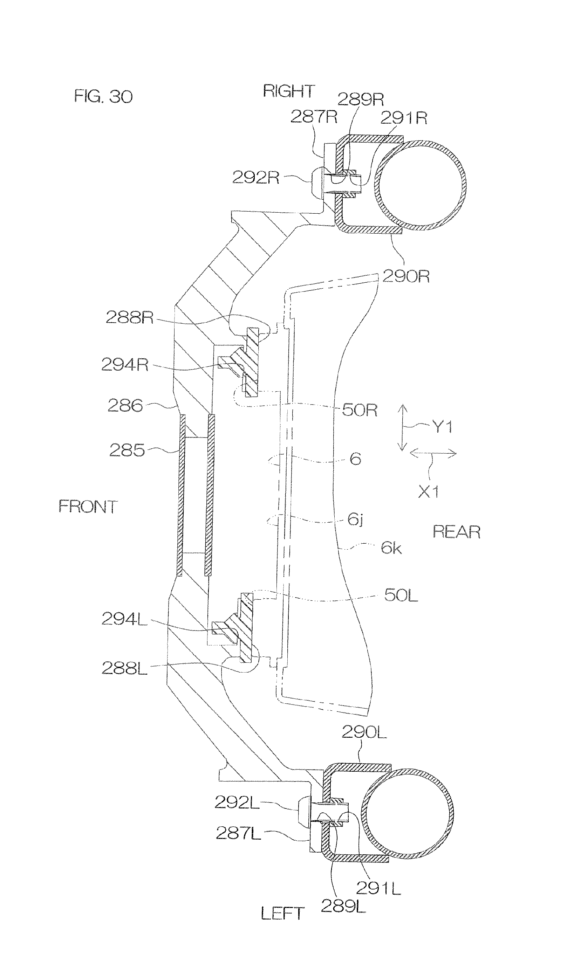

FIG. 30 is a sectional view of a main part around the intermediate second bracket 285 viewed from above. The intermediate second bracket 285 includes an intermediate second bracket body 286 that extends in the right-left direction Y1, intermediate second mounting portions 287L and 287R, and intermediate second battery supporting portions 288L and 288R. The intermediate second bracket body 286 and the intermediate second mounting portions 287L and 287R are made of a metal member.

The intermediate second bracket body 286 extends in the right-left direction Y1. The left end of the intermediate second bracket body 286 is fixed to the intermediate second mounting portion 287L.
An intermediate fourth through-hole 289L is formed in the intermediate second mounting portion 287L. The right end of the intermediate second bracket body 286 is fixed to the intermediate second mounting portion 287R. An intermediate fourth through-hole 289R is formed in the intermediate second mounting portion 287R.

The intermediate second battery supporting portions 288L and 288R are one example of the "central supporting portion" of the present invention. The intermediate second battery supporting portions 288L and 288R are integrally-molded pieces that are shaped by use of an elastic member such as rubber. The intermediate second battery supporting portion 288L passes through a through-hole 294L formed in the intermediate second bracket body 286. The intermediate second battery supporting portion 288L is shaped like a disk behind the through-hole 294L. The intermediate second battery supporting portion 286R passes through a through-hole 294R formed in the intermediate second bracket body 286. The intermediate second battery supporting portion 288R is shaped like a disk behind the through-hole 294R. The intermediate second battery supporting portions 288L and 288R are disposed apart from each other in the right-left direction Y1.

The intermediate second battery supporting portions 288L and 288R are in elastic contact with intermediate first support projections 50L and 50R, respectively, of the battery 6 from in front. As a result, the intermediate second battery supporting portions 288L and 288R elastically support the central portion 6k (the outer surface 6j) in the up-down direction of the battery 6 from in front.
The fourth through-hole 289L of the intermediate second mounting portion 287L of the intermediate second bracket 285 faces a third through-hole 291L formed in the intermediate second seat portion 290L in the front-rear direction X1. In this embodiment, the third through-hole 291L is a screw hole formed in a screw member. The intermediate second fixing member 292L is inserted into these through-holes 289L and 291L.

The intermediate second mounting portion 287L is detachably attached to the intermediate second seat portion 290L by use of the intermediate second fixing member 292L. In this embodiment, the intermediate second fixing member 292L is a screw member.
The intermediate second fixing member 292L passes through the fourth through-hole 289L and the third through-hole 291L, and is tightly screwed to the third through-hole 291L.

The fourth through-hole 289R of the intermediate second mounting portion 287R, which is a right-hand one, of the intermediate second bracket 285 faces a third through-hole 291R formed in the right second seat portion 290R in the front-rear direction X1. In this embodiment, the third through-hole 291R is a screw hole formed in a screw member. The intermediate second fixing member 292R is inserted into these through-holes 289R and 291R.
The intermediate second mounting portion 287R is detachably attached to the intermediate second seat portion 290R by use of the intermediate second fixing member 292R. In this embodiment, the intermediate second fixing member 292R is a screw member.

The intermediate second fixing member 292R passes through the fourth through-hole 289R and the third through-hole 291R, and is tightly screwed to the third through-hole 291R.
The first bracket 100E is formed in a laterally symmetrical shape as shown in FIG. 29. The first bracket 100E includes a first bracket body 101E, a seat supporting portion 102E disposed at the first bracket body 101E, and first mounting portions 103LE and 103 RE.

The first bracket body 101E is shaped like the letter U. The intermediate portion of the first bracket body 101 extends substantially straight in the right-left direction Y1. Each of the left and right portions of the first bracket body 101 extends rearwardly and obliquely downwardly.
The first mounting portion 103LE is fixed to the left rear end of the first bracket body 101. The first mounting portion 103LE is detachably attached to the first seat portion 120LE by use of the first fixing member 111L. The first seat portion 120LE is fixed to the upper end 22cL of the second frame portion 22L.

The first mounting portion 103RE is fixed to the right rear end of the first bracket body 101E. The first mounting portion 103RE is detachably attached to the first seat portion 120RE by use of the first fixing member 111R. The first seat portion 120RE is fixed to the upper end 22cR of the second frame portion 22R.
The seat supporting portion 102E is disposed at the intermediate portion in the right-left direction Y1 of the first bracket body 101E. The hinge portion 38 is attached to the seat supporting portion 102E.

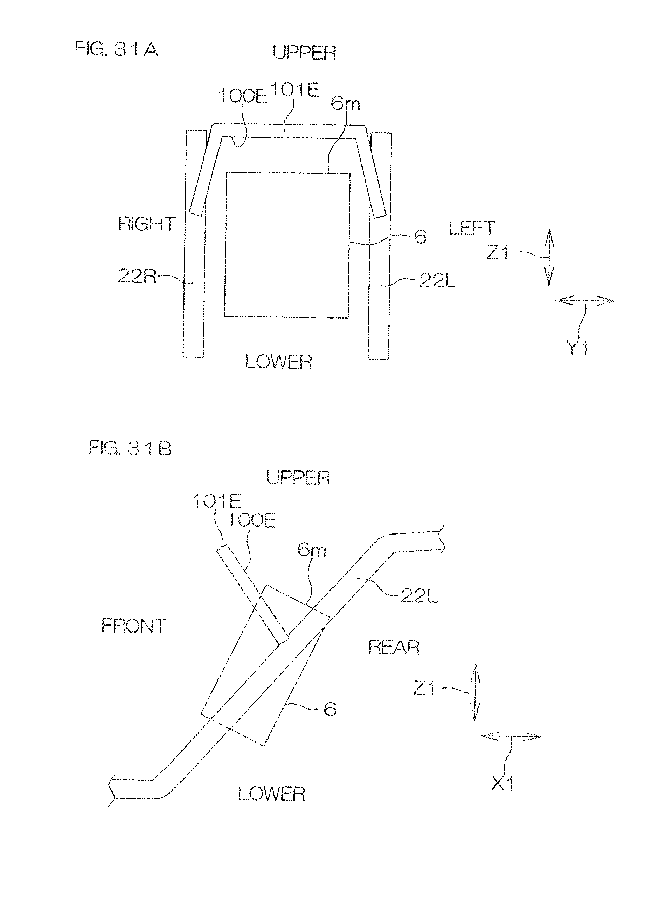

According to this embodiment, the first bracket 100E is not required to have a function to fix the battery 6. Therefore, the first bracket 100E is not required to be disposed near the battery 6, and it becomes possible to heighten the degree of layout freedom of the first bracket 100E.
The intermediate portion of the first bracket body 101E of this embodiment may be disposed above the upper end 6m of the battery 6 as shown in FIG. 31A and FIG. 31B.

### <Other Embodiments>

Although the frame main body 20 of the vehicle body frame 2 has been described as being laterally symmetrical, the present invention is not limited to this. The frame main body 20 may be laterally asymmetrical. For example, the left first frame portion 21L and the right first frame portion 21R of the frame main body 20 may be shaped so as to be laterally asymmetrical.

Additionally, the left second frame portion 22L and the right second frame portion 22R of the frame main body 20 are only required to have at least one part disposed so as to overlap with the battery 6 when viewed laterally. For example, the left second frame portion 22L and the right second frame portion 22R of the frame main body 20 may be shaped so as to be laterally asymmetrical.
Additionally, the left third frame portion 23L and the right third frame portion 23R of the frame main body 20 may be shaped so as to be laterally asymmetrical. Additionally, the left fourth frame portion 24L and the right fourth frame portion 24R of the frame main body 20 may be shaped so as to be laterally asymmetrical.

Additionally, although the first pivot shaft 74 and the second pivot shafts 75L and 75R are disposed behind the rear surface 6g of the battery 6 as described above, the present invention is not limited to this. The first pivot shaft 74 and the second pivot shafts 75L and 75R may be disposed below the lower end 6n of the battery 6. Additionally, the second pivot shafts 75L and 75R may be omitted, and the plates 76L and 76R may be directly fixed to the fourth frame portions 24L and 24R.

Additionally, although the battery supporting portions 106L and 106R of the first bracket 100, the battery supporting portions 216L and 216R of the upper second bracket 210, the battery supporting portions 256L and 256R of the lower second bracket 250, and the battery supporting portions 288L and 288R of the intermediate second bracket 285 are respectively made of elasticmembers as described above, the present invention is not limited to this. Each of these battery supporting portions may be made of a hard material such as metal.

Additionally, although each of the first bracket 100, the upper second bracket 210, the lower second bracket 250, and the intermediate second bracket 285 is attached to both the second frame portion 22L and the second frame portion 22R as described above, the present invention is not limited to this. These brackets may be attached only to the second frame portion 22L or only to the second frame portion 22R.

Additionally, the upper second bracket 210 or the lower second bracket 250 may be omitted.
Additionally, although the battery 6 is supported by the vehicle body frame 2 in an inclined posture as described above, the present invention is not limited to this. For example, the battery 6 may be disposed straight in the up-down direction Z1.
Additionally, although screw members are mentioned as an example of the first fixing members 111L and 111R as described above, the present invention is not limited to this. Another fixing member, such as a pin, with which two members are fixed together may be used as the first fixing member. Likewise, although screw members are mentioned as an example of the second fixing members 222L, 222R, 282L, 282R, 292L, and 292R as described above, the present invention is not limited to this. Another fixing member, such as a pin, with which two members are fixed together may be used as the second fixing member.

Additionally, although the seat 37 is attached to the seat supporting portion 102 with the hinge member 38 therebetween as described above, the present invention is not limited to this. The seat 37 may be directly fixed to the seat supporting portion 102, or a stay that extends forwardly from the seat supporting portion 102 may be additionally provided, and the seat 37 may be fixed to this stay.
Additionally, although the battery 6 is supported from in front of, frombehind, and fromblow the battery 6 as described above, the present invention is not limited to this. A supporting member that presses and holds the upper end surface 6e of the battery 6 from above may be detachably attached to the vehicle body frame 2. Additionally, a supporting member that presses and holds the left side surface 6c of the battery 6 from the left side may be detachably attached to the vehicle body frame 2. Additionally, a supporting member that presses and holds the right side surface 6d of the battery 6 from the right side may be detachably attached to the vehicle body frame 2. Additionally, a protective member that surrounds the periphery of the battery 6 may be provided.

Although the embodiments of the present invention have been described in detail as above, these are merely specific examples used to clarify the technical contents of the present invention, and the present invention should not be understood as being limited to these examples, and the scope of the present invention is to be determined solely by the appended claims.

### Reference Signs List

1... Two-wheeled electric vehicle
2... Vehicle body frame
4... Rear wheel
5... Electric motor
6... Battery
6a ... Upper portion of battery
6b ... Lower portion of battery
6j ... Outer surface of battery
6k ... Central portion of battery
6m... Upper end of battery
6n ... Lower end of battery
7... Vehicle body cover
24L, 24R ... Second frame portion (Two frame portions)
34... Feet-putting portion
37... Seat
37b ... Upper surface of seat
37d ... Lower end of seat
71... Swing unit
74... First pivot shaft (Pivot portion)
75L, 75R ... Second pivot shaft (Pivot portion)
100, 100A, 100B, 100E ... First bracket
102... Seat supporting portion
103L, 103R ... First mounting portion
103LA, 103RA ... First mounting portion
103LB, 103RB ... First mounting portion
103LE, 103RE ... First mounting portion
106L, 106R ... First battery supporting portion (Central supporting portion) (supporting the battery from in front of the battery)
111L, 111R ... First fixing member
120L, 120R ... First seat portion
120LB, 120RB ... First seat portion
120LE, 120RE ... First seat portion
121L, 121R ... First through-hole
122L, 122R ... Second through-hole
200... Second bracket
210... Upper second bracket (Upper bracket)
213L, 213R.... Upper second mounting portion
213LC, 213RC ... Upper second mounting portion
213LD, 213RD ... Upper second mounting portion
214L, 214R ... Pressing portion
216L, 216R ... Upper second battery supporting portion (supporting the battery from in front of the battery)
222L, 222R ... Upper second fixing member
230L, 230R ... Upper second seat portion
230LC, 230RC ... Upper second seat portion
230LD, 230RD ... Upper second seat portion
243L, 243R .... Upper third through-hole
244L, 244R ... Upper fourth through-hole
250... Lower second bracket (Lower bracket)
256L, 256R ... Lower second battery supporting portion (supporting the battery from in front of the battery)
282L, 282R ... Lower second fixing member
283L, 283R ... Lower third through-hole
284L, 284R ... Lower fourth through-hole
288L, 288R ... Intermediate battery supporting portion (Central supporting portion) (supporting the battery from in front of the battery)
289L, 289R ... Intermediate fourth through-hole
291L, 291R ... Intermediate third through-hole
292L, 292R ... Intermediate second fixing member
300... Third bracket
302... Third battery supporting portion (Battery supporting portion that supports the battery from behind the battery)
400... Fourth bracket
402L, 402R ... Fourth battery supporting portion (Battery supporting portion that supports the battery from behind the battery)
500... Fifth bracket
503L, 503R ... Front receiving portion (Receiving portion of fifth bracket)
504L, 504R ... Rear receiving portion (Receiving portion of fifth bracket)
X1 ... Vehicle front-rear direction
Y1 ... Vehicle right-left direction
Z1 ... Vehicle up-down direction

## Claims

1. A two-wheeled electric vehicle comprising:
a seat on which a driver sits;
a feet-putting portion that is disposed in front of and below the seat and on which feet of the driver are put;
a vehicle body frame that has two frame portions, the two frame portions being disposed laterally apart from each other and extending upwardly and downwardly below the seat;
a vehicle body cover disposed outside the vehicle body frame;
a swing unit that has an electric motor to drive a rear wheel and that is swingably connected to the vehicle body frame through a pivot portion;
a battery that is disposed between the two frame portions below the seat and that supplies electric power to the electric motor;
a first bracket including a seat supporting portion and a first mounting portion, the seat supporting portion supporting the seat from below, the first mounting portion being disposed between an upper end and a lower end of the battery in a vehicle up-down direction and being detachably attached to at least either one of the two frame portions; and
a second bracket disposed between the upper end and the lower end of the battery in front of the battery, the second bracket including a battery supporting portion that supports the battery from in front of the battery and a second mounting portion that is detachably attached to the vehicle body frame.

2. The two-wheeled electric vehicle according to claim 1, wherein the upper end of the battery is disposed above the lower end of the seat and below an upper surface of the seat when viewed laterally.

3. The two-wheeled electric vehicle according to claim 1 or claim 2, wherein the first bracket includes a battery supporting portion that supports the battery from in front of the battery, and, as a result, the first bracket serves also as a second bracket.

4. The two-wheeled electric vehicle according to claim 3, wherein the battery supporting portion includes a central supporting portion that supports a central part of the battery in a vehicle up-down direction.

5. The two-wheeled electric vehicle according to claim 1 or claim 2,
wherein the first bracket includes a battery supporting portion that supports the battery from in front of the battery, and
wherein the second bracket includes:
an upper bracket, the upper bracket including: a battery supporting portion that supports an upper part of the battery from in front of the battery; and a second mounting portion detachably attached to the vehicle body frame at a position higher than the first mounting portion; and
a lower bracket, the lower bracket including: a battery supporting portion that supports a lower part of the battery from in front of the battery; and a second mounting portion detachably attached to the vehicle body frame at a position lower than the first mounting portion.

6. The two-wheeled electric vehicle according to claim 5, wherein the upper bracket includes a pressing portion that presses and holds the battery from above.

7. The two-wheeled electric vehicle according to claim 5 or claim 6, further comprising a third bracket supported by the vehicle body frame, the third bracket being disposed so as to face the battery supporting portion of the upper bracket with the battery between the third bracket and the battery supporting portion of the upper bracket, the third bracket including a battery supporting portion that supports the battery from behind the battery.

8. The two-wheeled electric vehicle according to any one of claim 5 to claim 7, further comprising a fourth bracket supported by the vehicle body frame, the fourth bracket being disposed so as to face the battery supporting portion of the lower bracket with the battery between the fourth bracket and the battery supporting portion of the lower bracket, the fourth bracket including a battery supporting portion that supports the battery from behind the battery.

9. The two-wheeled electric vehicle according to any one of claim 1 to claim 8, wherein the battery supporting portion is made of an elastic member, and elastically presses and holds an outer surface of the battery.

10. The two-wheeled electric vehicle according to any one of claim 1 to claim 9, further comprising a fifth bracket that is supported by the vehicle body frame and that supports the battery from below the battery.

11. The two-wheeled electric vehicle according to claim 10, wherein the fifth bracket supports the battery in a posture in which the battery is inclined so that the upper end of the battery is positioned more rearwardly than the lower end of the battery.

12. The two-wheeled electric vehicle according to claim 11, wherein the fifth bracket includes a receiving portion that is inclined so as to extend rearwardly and obliquely downwardly and that receives a load of the battery.

13. The two-wheeled electric vehicle according to any one of claim 1 to claim 12, wherein the frame portions include a first seat portion, the two-wheeled electric vehicle further comprising a first fixingmember that detachably fixes the first mounting portion of the first bracket to the first seat portion.

14. The two-wheeled electric vehicle according to claim 13, wherein the first seat portion has a first through-hole, and the first mounting portion has a second through-hole that coaxially faces the first through-hole, and the first fixing member passes through the first through-hole and the second through-hole.

15. The two-wheeled electric vehicle according to claim 14, wherein the first through-hole and the second through-hole face each other in a vehicle front-rear direction or in a vehicle right-left direction or in the vehicle up-down direction.

16. The two-wheeled electric vehicle according to any one of claim 1 to claim 15, wherein the frame portions include a second seat portion, the two-wheeled electric vehicle further comprising a second fixing member that detachably fixes the second mounting portion of the second bracket to the second seat portion.

17. The two-wheeled electric vehicle according to claim 16, wherein the second seat portion has a third through-hole, and the second mounting portion has a fourth through-hole that coaxially faces the third through-hole, and the second fixing member passes through the third through-hole and the fourth through-hole.

18. The two-wheeled electric vehicle according to claim 17, wherein the third through-hole and the fourth through-hole face each other in the vehicle front-rear direction or in the vehicle right-left direction or in the vehicle up-down direction.
